# EUROPEAN PATENT APPLICATION

(11) **EP 4 645 234 A1**
(43) Date of publication of application: **05.11.2025**
(21) Application number: 25173851.4
(22) Date of filing: 01.05.2025
(51) Int. Cl.: G06T 15/00, G06T 11/40

(54) **GRAPHICS PROCESSING UNIT FOR PROCESSING PRIMITIVES USING A RENDERING SPACE WHICH IS SUB-DIVIDED INTO A PLURALITY OF TILES**

(30) Priority: 03.05.2024 GB 202406250; 03.05.2024 GB 202406251
(71) Applicant: Imagination Technologies Limited, Kings Langley, Hertfordshire WD4 8LZ (GB)
(72) Inventor: Livesley, Michael, Kings Langley, WD4 8LZ (GB)
(74) Representative: Slingsby Partners LLP

(57) **Abstract**

A graphics processing unit (GPU) and method are described for processing primitives using a rendering space which is sub-divided into a plurality of tiles. The GPU comprises a tiling module, which comprises a plurality of tile pipelines and a tile arbiter. The tile arbiter receives tile-primitive indications, wherein each of the tile-primitive indications indicates an association between a tile and a set of one or more primitives. The tile arbiter determines which of the tile pipelines to send each of the tile-primitive indications to in accordance with a dynamic allocation scheme which does not have a fixed mapping between tiles and tile pipelines. The tile arbiter sends each of the tile-primitive indications to the tile pipeline determined for that tile-primitive indication. Each of the tile pipelines is configured to: receive the tile-primitive indications that are sent to that tile pipeline by the tile arbiter; and use the received tile-primitive indications to, for each of the tiles for which a tile-primitive indication is received at the tile pipeline, include in a control stream for that tile, indications of primitives that are present within that tile.

## Description

### CROSS-REFERENCE TO RELATED APPLICATION

This application claims priority from UK patent applications 2406250.7 and 2406251.5 which were both filed on 3 May 2024, which are herein incorporated by reference in their entirety.

### TECHNICAL FIELD

The present disclosure is directed to graphics processing units (GPUs) which are configured to process primitives using a rendering space which is sub-divided into a plurality of tiles. Graphics processing techniques for processing primitives using a rendering space which is sub-divided into a plurality of tiles may be referred to as 'tile-based rendering' techniques.

### BACKGROUND

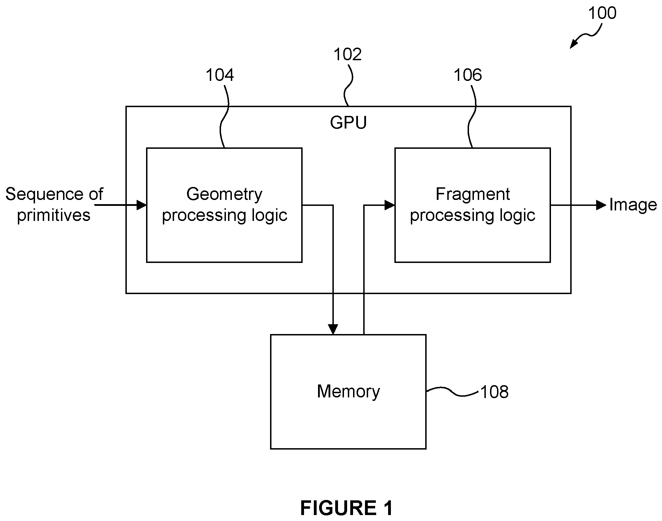

Some graphics processing units (GPUs), e.g. those which are configured to implement tile-based rendering techniques, implement a geometry processing phase and a fragment processing phase in order to render images. Figure 1 shows a graphics processing system 100 comprising a GPU 102 which comprises geometry processing logic 104 and fragment processing logic 106. The graphics processing system 100 also comprises a memory 108. The geometry processing phase is implemented using the geometry processing logic 104, and the fragment processing phase is implemented using the fragment processing logic 106. Some logic of the GPU 102, e.g. execution units, may be used for implementing parts of both the geometry processing phase and the fragment processing phase.

The GPU 102 receives a sequence of primitives, e.g. from an application which submits a draw call to the GPU. The primitives may represent objects in a scene to be rendered. For example, the primitives may be points, lines or polygons, such as triangles. A primitive may be represented with a set of vertices (e.g. a triangular primitive is represented with a set of three vertices), where data is associated with each vertex. For example, the vertex data for a vertex may describe the position of the vertex as well as information (which may be referred to as "attributes" or "varyings") relating to the way in which the primitive(s) including that vertex should be rendered. To give some examples, the attributes of a vertex may indicate a colour or an opacity, or geometry shader operations to be applied or a texture to be applied when processing the vertex. During the geometry processing phase the geometry processing logic 104: (i) performs one or more geometry processing functions on the primitives, such as transforming the positions of the vertices into a rendering space and clipping/culling primitives that are outside of the rendering space, and (ii) performs tiling on the processed primitives in order to determine which primitives are present within each tile of the rendering space.

The geometry processing logic 104 outputs data, which can be stored in a buffer in the memory 108. The memory 108 is external to the GPU 102, and may for example be implemented in Dynamic Random Access Memory (DRAM) within the graphics processing system 100. The data which is stored in the buffer comprises the processed primitive data for the primitives and control streams for the tiles of the rendering space. For example, the processed primitive data may be stored in primitive blocks, where a primitive block includes primitive data representing a set of one or more primitives. Storing primitive data in primitive blocks can allow for opportunities to compress the primitive data, e.g. where primitives share data. It is not uncommon for primitives to share data, e.g. if they represent the same surface of an object, and where the primitives form a mesh representing a surface then primitives may share vertices and/or edges. The control stream for a tile includes indications of primitives which are present in that tile. The indications of the primitives may take the form of masks which indicate which of the primitives of a primitive block are present within a tile.

During the fragment processing phase, the fragment processing logic 106 processes tiles of the rendering space independently. The fragment processing logic 106 may operate on a single tile at a time, or on multiple tiles at a time, i.e. there may be one or more 'tiles in flight' at any given time being processed in the fragment processing phase. In order to process a tile, the fragment processing logic 106 reads the control stream for the tile from the memory 108 to determine which primitives are present within the tile. The fragment processing logic 106 reads the primitive data from the memory 108 for those primitives which are present within the tile. The fragment processing logic 106 then performs fragment processing, which may for example involve: (i) performing rasterisation on the primitives to determine primitive fragments representing the primitives at discrete sample positions within the tile, (ii) performing hidden surface removal on the primitive fragments to remove fragments which are occluded, e.g. by other fragments in the scene, and (iii) performing fragment shading and/or texturing on the remaining fragments to determine an appearance at each sample position of the tile. Each sample position may correspond to a pixel of an image being rendered. In some examples, each pixel may correspond to multiple sample positions, and an averaging process may be performed on the values determined at the sample positions in order to determine the rendered pixel values. The rendered pixel values for a tile can be stored, e.g. in a frame buffer. When all of the tiles have been processed in the fragment processing phase, the rendered pixel values for all of the tiles of the rendering space can be output and used to represent an image. The image may be used in any suitable manner, e.g. the image may be stored, displayed on a display and/or transmitted to another device, e.g. over a network such as the internet.

The present disclosure relates primarily to improvements in the geometry processing phase of a rendering process on a GPU which is configured to use a rendering space which is sub-divided into a plurality of tiles. It is generally desirable to: (i) reduce the latency of a GPU, (ii) reduce the power consumption of the GPU, and (iii) reduce the size (e.g. the silicon area) of the GPU. There may be a trade-off between these three factors. For example, the size of the GPU may be reduced (e.g. by implementing more functionality in software rather than in hardware) at the cost of increasing the latency and/or power consumption of the GPU. As another example, the latency of the GPU may be reduced (e.g. by increasing the amount of hardware implemented in the GPU) at the cost of increasing the size and/or power consumption of the GPU.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a graphics processing unit configured to process primitives using a rendering space which is sub-divided into a plurality of tiles, the graphics processing unit comprising a tiling module, wherein the tiling module comprises:
a plurality of tile pipelines; and
a tile arbiter configured to:
   receive tile-primitive indications, wherein each of the tile-primitive indications indicates an association between a tile and a set of one or more primitives;
   determine which of the tile pipelines to send each of the tile-primitive indications to in accordance with a dynamic allocation scheme which does not have a fixed mapping between tiles and tile pipelines; and
   send each of the tile-primitive indications to the tile pipeline determined for that tile-primitive indication;
wherein each of the tile pipelines is configured to:
   receive the tile-primitive indications that are sent to that tile pipeline by the tile arbiter; and
   use the received tile-primitive indications to, for each of the tiles for which a tile-primitive indication is received at the tile pipeline, include in a control stream for that tile, indications of primitives that are present within that tile.

The control stream for a tile may be a control stream for controlling fragment processing to be performed for that tile, e.g. by identifying the primitives which are present within that tile.

The tiling module may comprise a tail pointer cache configured to store, for each of the tiles of the rendering space, an indication of the location in the control stream for the tile of the data that is most-recently written to the control stream,
wherein all of the tile pipelines may be configured to read and write data for the control streams of all of the tiles of the rendering space from and to the tail pointer cache.

The tail pointer cache may comprise tile-locking logic configured to ensure that no more than one of the tile pipelines processes data relating to the same tile at any given time.

The dynamic allocation scheme may be a round robin scheme.

The dynamic allocation scheme may be a load balancing scheme.

The tile pipelines may be configured to operate in parallel on different tile-primitive indications.

The graphics processing unit may comprise geometry processing logic, wherein the tiling module may be part of the geometry processing logic, and wherein the geometry processing logic may further comprise a plurality of geometry pipelines configured to receive batches of primitives. Each of the geometry pipelines may comprise one or more geometry processing modules configured to perform one or more geometry processing functions on the primitives of a batch of primitives received at the geometry pipeline.

The tiling module may be a tiling back-end module. Each of the geometry pipelines may comprise a tiling front-end module configured to determine one or more of the tile-primitive indications for each tile of a set of one or more tiles, wherein the one or more tile-primitive indications for a tile may indicate which of the primitives of the batch of primitives received at the geometry pipeline are present within that tile. The tiling back-end module may be configured to:
receive the tile-primitive indications determined by the plurality of geometry pipelines; and
for each of the tiles for which a tile-primitive indication is received, include indications of the primitives that are present within that tile in a control stream for that tile.

The graphics processing unit may be configured to receive the primitives as a sequence of primitives. The tiling back-end module may be configured to include the indications of the primitives in the control streams for the tiles in an order in accordance with an order of the primitives within the sequence of primitives.

Each of the tile pipelines may comprise a control stream generator module configured to, for each of the tiles for which it receives a tile-primitive indication, include indications of the primitives that are present within that tile in the control stream for that tile.

For each of the geometry pipelines:
said one or more geometry processing modules of the geometry pipeline may comprise a block generator module configured to generate primitive blocks, wherein each of the primitive blocks may include primitive data representing a set of one or more primitives, and
the one or more tile-primitive indications for a tile determined by the tiling front-end module of the geometry pipeline may comprise a tile-primitive mask for each of the primitive blocks indicating which of the primitives of the primitive block are present within that tile.

The tiling front-end module of each of the geometry pipelines may comprise region generation logic configured to determine, for each tile of the rendering space in a bounding box for a primitive block, a tile-primitive association indication for each of the primitives of the primitive block that has a primitive bounding box that is present within that tile, wherein the primitive bounding box for a primitive may indicate a region of the rendering space which wholly encompasses that primitive.

The tiling front-end module of each of the geometry pipelines may further comprise tiling refinement logic configured to:
receive the determined tile-primitive association indications determined by the region generation logic of that geometry pipeline;
determine, for each of the received tile-primitive association indications whether the primitive to which the tile-primitive association indication relates is present within the tile to which the tile-primitive association indication relates; and
remove a tile-primitive association indication in response to determining that the primitive to which the tile-primitive association indication relates is not present within the tile to which the tile-primitive association indication relates.

The tiling front-end module of each of the geometry pipelines may further comprise an accumulator module configured to:
receive tile-primitive association indications relating to a tile and relating to primitives of a primitive block; and
determine the tile-primitive mask for the primitive block indicating which of the primitives of the primitive block are present within the tile.

The graphics processing unit may be configured to receive the primitives as a sequence of primitives. The graphics processing unit may further comprise a geometry-tiling arbiter configured to:
receive primitive data for primitives that have been processed by the geometry pipelines; and
send the primitive data to the tiling module in accordance with an order of the primitives within the sequence of primitives,
wherein the tiling module may comprise region generation logic configured to:
   determine one or more of the tile-primitive indications for each tile of a set of one or more tiles, wherein the one or more tile-primitive indications for a tile indicate primitives that have primitive bounding boxes that are present within that tile, wherein the primitive bounding box for a primitive indicates a region of the rendering space which wholly encompasses that primitive; and
   pass the determined one or more tile-primitive indications to the tile arbiter.

Each of the tile pipelines may comprise tiling refinement logic configured to:
receive the determined tile-primitive indications determined by the region generation logic;
determine, for each of the received tile-primitive indications whether the primitive to which the tile-primitive indication relates is present within the tile to which the tile-primitive indication relates; and
remove a tile-primitive indication in response to determining that the primitive to which the tile-primitive indication relates is not present within the tile to which the tile-primitive indication relates.

Each of the tile pipelines may further comprise an accumulator module configured to:
receive tile-primitive indications relating to a tile and relating to primitives of a primitive block, wherein the primitive block includes primitive data representing a set of one or more primitives; and
determine a tile-primitive mask for the primitive block indicating which of the primitives of the primitive block are present within the tile.

The graphics processing unit may comprise fragment processing logic configured to render an image using the control streams for the tiles of the rendering space.

The primitives may represent objects in a scene to be rendered.

The graphics processing unit may be embodied in hardware on an integrated circuit.

There is provided a method of processing primitives in a graphics processing unit configured to use a rendering space which is sub-divided into a plurality of tiles, the method comprising performing tiling, wherein the tiling comprises:
receiving tile-primitive indications at a tile arbiter, wherein each of the tile-primitive indications indicates an association between a tile and a set of one or more primitives;
determining, at the tile arbiter, which of a plurality of tile pipelines to send each of the tile-primitive indications to in accordance with a dynamic allocation scheme which does not have a fixed mapping between tiles and tile pipelines;
sending each of the tile-primitive indications to the tile pipeline determined for that tile-primitive indication;
at each of the tile pipelines:
   receiving the tile-primitive indications that are sent to that tile pipeline; and
   using the tile-primitive indications received at the tile pipeline to, for each of the tiles for which a tile-primitive indication is received at the tile pipeline, include in a control stream for that tile, indications of primitives that are present within that tile.

The method may comprise:
implementing a geometry processing phase of a rendering process, wherein the tiling is part of the geometry processing phase; and
implementing a fragment processing phase of the rendering process to render an image using data stored in a buffer during the geometry processing phase, wherein the data stored in the buffer comprises the control streams for the tiles of the rendering space.

There may be provided a graphics processing system configured to perform any of the methods described herein.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a graphics processing unit as described herein.

There may be provided a graphics processing unit configured to process primitives using a rendering space which is sub-divided into a plurality of tiles, the graphics processing unit comprising a tiling module, wherein the tiling module comprises:
a plurality of tile pipelines;
a tile arbiter configured to:
   receive tile-primitive indications, wherein each of the tile-primitive indications indicates an association between a tile and a set of one or more primitives;
   determine which of the tile pipelines to send each of the tile-primitive indications to; and
   send each of the tile-primitive indications to the tile pipeline determined for that tile-primitive indication; and
a tail pointer cache configured to store, for each of the tiles of the rendering space, an indication of the location in the control stream for the tile of the data that is most-recently written to the control stream, wherein all of the tile pipelines are configured to read and write data for the control streams of all of the tiles of the rendering space from and to the tail pointer cache;
wherein each of the tile pipelines is configured to:
   receive the tile-primitive indications that are sent to that tile pipeline by the tile arbiter; and
   use the received tile-primitive indications to, for each of the tiles for which a tile-primitive indication is received at the tile pipeline, include in a control stream for that tile, indications of primitives that are present within that tile.

There may be provided a method of processing primitives in a graphics processing unit configured to use a rendering space which is sub-divided into a plurality of tiles, the method comprising performing tiling, wherein the tiling comprises:
receiving tile-primitive indications at a tile arbiter, wherein each of the tile-primitive indications indicates an association between a tile and a set of one or more primitives;
determining, at the tile arbiter, which of a plurality of tile pipelines to send each of the tile-primitive indications to;
sending each of the tile-primitive indications to the tile pipeline determined for that tile-primitive indication;
at each of the tile pipelines:
   receiving the tile-primitive indications that are sent to that tile pipeline; and
   using the tile-primitive indications received at the tile pipeline to, for each of the tiles for which a tile-primitive indication is received at the tile pipeline, include in a control stream for that tile, indications of primitives that are present within that tile,
wherein a tail pointer cache stores, for each of the tiles of the rendering space, an indication of the location in the control stream for the tile of the data that is most-recently written to the control stream, wherein all of the tile pipelines read and write data for the control streams of all of the tiles of the rendering space from and to the tail pointer cache.

There may be provided a graphics processing unit configured to process a sequence of primitives using a rendering space which is sub-divided into a plurality of tiles, the graphics processing unit comprising geometry processing logic which comprises:
a plurality of geometry pipelines configured to receive batches of primitives of the sequence of primitives, wherein each of the geometry pipelines comprises:
   one or more geometry processing modules configured to perform one or more geometry processing functions on the primitives of a batch of primitives received at the geometry pipeline; and
   a tiling front-end module configured to determine, for each tile of a set of one or more tiles, one or more tile-primitive indications indicating which of the primitives of the batch of primitives received at the geometry pipeline are present within that tile; and
a tiling back-end module configured to:
   receive the tile-primitive indications determined by the plurality of geometry pipelines; and
   for each of the tiles for which a tile-primitive indication is received, include indications of the primitives that are present within that tile in a control stream for that tile in an order in accordance with an order of the primitives within the sequence of primitives.

There may be provided a method of processing a sequence of primitives in a graphics processing unit configured to use a rendering space which is sub-divided into a plurality of tiles, the method comprising implementing a geometry processing phase of a rendering process, wherein the geometry processing phase comprises:
receiving batches of primitives of the sequence of primitives at a plurality of geometry pipelines;
at each of the geometry pipelines:
   performing one or more geometry processing functions on the primitives of a batch of primitives received at the geometry pipeline; and
   determining, at a tiling front-end module of the geometry pipeline, for each tile of a set of one or more tiles, one or more tile-primitive indications indicating which of the primitives of the batch of primitives received at the geometry pipeline are present within that tile;
receiving the tile-primitive indications determined by the plurality of geometry pipelines at a tiling back-end module; and
for each of the tiles for which a tile-primitive indication is received at the tiling back-end module, including indications of the primitives that are present within that tile in a control stream for that tile in an order in accordance with an order of the primitives within the sequence of primitives.

The graphics processing unit may be embodied in hardware on an integrated circuit. There may be provided a method of manufacturing, at an integrated circuit manufacturing system, a graphics processing unit. There may be provided an integrated circuit definition dataset that, when processed in an integrated circuit manufacturing system, configures the system to manufacture a graphics processing unit. There may be provided a non-transitory computer readable storage medium having stored thereon a computer readable description of a graphics processing unit that, when processed in an integrated circuit manufacturing system, causes the integrated circuit manufacturing system to manufacture an integrated circuit embodying a graphics processing unit.

There may be provided an integrated circuit manufacturing system comprising: a non-transitory computer readable storage medium having stored thereon a computer readable description of the graphics processing unit; a layout processing system configured to process the computer readable description so as to generate a circuit layout description of an integrated circuit embodying the graphics processing unit; and an integrated circuit generation system configured to manufacture the graphics processing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a graphics processing system;
Figure 2 shows geometry processing logic of a first graphics processing unit;
Figure 3 shows geometry processing logic of a graphics processing unit according to a first improvement described herein;
Figure 4 is a flow chart for a method of processing a sequence of primitives in a graphics processing unit;
Figure 5A shows four primitives of a primitive block within a bounding box of the primitive block;
Figure 5B shows the primitive bounding boxes of the four primitives shown in Figure 5A;
Figure 5C shows how many cycles it will take the tiling module to process each of the tiles within the bounding box of the primitive block;
Figure 6 is a flow chart for a method of processing primitives to perform tiling in a graphics processing unit;
Figure 7 is an example showing four primitives and their bounding boxes within a rendering space;
Figure 8 shows geometry processing logic of a graphics processing unit according to a second improvement described herein;
Figure 9 shows a computer system in which a graphics processing system is implemented; and
Figure 10 shows an integrated circuit manufacturing system for generating an integrated circuit embodying a graphics processing unit.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. The present disclosure relates to improvements to the geometry processing logic and to the geometry processing phase implemented in a GPU, such as the GPU 102 described above with reference to Figure 1.

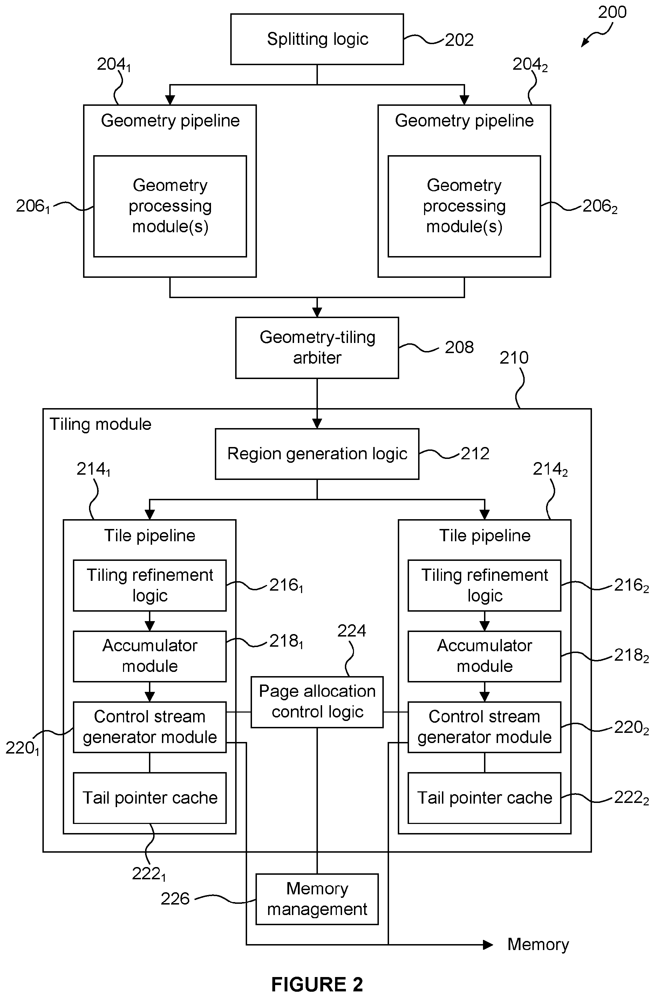

Figure 2 shows geometry processing logic 200 of a first graphics processing unit. The geometry processing logic 200 could be implemented as the geometry processing logic 104 shown in Figure 1. The geometry processing logic 200 comprises splitting logic 202 and a plurality of geometry pipelines 204. In the example shown in Figure 2 the geometry processing logic 200 comprises two geometry pipelines (204₁ and 204₂), but in other examples there may be more geometry pipelines in the geometry processing logic. Each of the geometry pipelines 204 comprises one or more geometry processing modules 206 which are configured to perform respective geometry processing functions. The geometry processing logic 200 also comprises a geometry-tiling arbiter 208 and a tiling module 210. The tiling module 210 comprises region generation logic 212 and a plurality of tile pipelines 214. In the example shown in Figure 2 the tiling module 210 comprises two tile pipelines (214₁ and 214₂), but in other examples there may be more tile pipelines in the tiling module. Each of the tile pipelines 214 comprises tiling refinement logic 216, an accumulator module 218, a control stream generator module 220 and a tail pointer cache 222. The tiling module 210 also comprises page allocation control logic 224. The geometry processing logic 200 also comprises a memory management module 226.

The 'modules', 'units' and 'logic', and the arbiters, described herein may be implemented in software, hardware or any combination thereof. Usually implementing functionality in hardware (e.g. in fixed-function circuitry) provides a more efficient implementation in terms of reduced latency and reduced power consumption compared to implementing the functionality in software. However, implementing functionality in software provides more flexibility in the operation, e.g. the operation performed by the software can be changed after the GPU has been manufactured, which would be difficult or impossible to do with operations implemented in hardware such as fixed-function circuitry. Many of the functions performed by the geometry processing logic 200 need to be repeated many times in order to render an image, e.g. many different primitives (e.g. millions or billions of primitives) may be processed, and the functions do not need to change, so it may be beneficial to implement most of the functions performed by the geometry processing logic 200 in hardware.

A draw call is received at the splitting logic 202. The splitting logic 202 may be referred to as a Drawing Command Engine (DCE). A draw call includes the information that the GPU needs in order to render an image, or a part of an image. For example, a draw call includes a sequence of primitives representing objects in a scene to be rendered. The splitting logic 202 splits the sequence of primitives into batches of primitives, and sends each batch of primitives to one of the geometry pipelines 204. The splitting logic 202 associates each of the batches of primitives with an indication of its position according to the order of the primitives within the sequence of primitives. The indication of the position of a batch of primitives may be referred to as a Pipeline Interleave Marker (PIM). The batches of primitives are processed by the geometry pipelines 204. In particular, the geometry processing module(s) 206₁ of the geometry pipeline 204₁ performs geometry processing functions on the primitives of a batch of primitives received at the geometry pipeline 204₁, and the geometry processing module(s) 206₂ of the geometry pipeline 204₂ performs geometry processing functions on the primitives of a batch of primitives received at the geometry pipeline 204₂. As described in more detail below, the geometry processing performed by a geometry pipeline 204 results in: (i) primitives being transformed into the rendering space and stored in primitive blocks, which can be written out to the memory (e.g. memory 108), and (ii) position data for the primitives in the rendering space which can be used by the tiling module 210 to determine which primitives are present within which tiles of the rendering space.

The geometry pipelines operate in parallel on different batches of primitives, and output, to the geometry-tiling arbiter 208, data which is to be passed to the tiling module 210. The time it takes for a geometry pipeline to process a batch of primitives is highly variable, for example depending on the type of geometry processing that is performed on the primitives (e.g. depending on whether complex geometry shader programs are executed in respect of the primitives). As such, it is possible (in fact, likely) that the data for the batches of primitives received at the geometry-tiling arbiter 208 is in a different order to the order of the primitives in the sequence of primitives received at the splitting logic 202. However, it is important that the original order of the primitives within the received sequence of primitives is maintained when primitive indications are added to the control streams for the tiles. This is because the order in which primitives are processed in the fragment processing logic 106 can affect the appearance of the final rendered image (e.g. when overlapping translucent primitives are processed). Therefore, the geometry-tiling arbiter 208 receives primitive data from the multiple geometry pipelines 204 and provides the primitive data to the tiling module 210 (e.g. to the region generation logic 212) in accordance with the submission order of the primitives in the draw call. In order to do this, the indications of the positions of the batches of primitives according to the order of the primitives within the sequence of primitives (the PIMs) are used to ensure the correct order is maintained when the outputs from the geometry pipelines are joined. For each primitive block, the primitive data passed from the geometry-tiling arbiter 208 to the tiling module 210 includes a bounding box for the primitive block, indications of the positions of the vertices of the primitives in the primitive block, and some sideband information relating to the primitive block, such as a primitive type of the primitives in the primitive block and the number of primitives in the primitive block.

In the geometry processing logic 200 shown in Figure 2, there is a limit of one primitive per clock cycle for sending data over an interface from the geometry-tiling arbiter 208 to the tiling module 210. This limit is present in the geometry processing logic 200 shown in Figure 2 because the region generation logic 212 in the tiling module 210 operates on one primitive at a time (as described below).

The tiling module 210 receives the data relating to a primitive block (e.g. an indication of the bounding box of the primitive block, and the positions of the vertices of the primitives in the primitive block) and buffers this data in the tiling module 210 (e.g. within the region generation logic 212). The region generation logic 212 processes each tile within the bounding box of the primitive block. For each tile within the bounding box of the primitive block, the region generation logic 212 performs a test for each of the primitives of the primitive block to determine whether the primitive bounding box for the primitive is present in the tile. If it is determined that the primitive bounding box of a primitive is present in a tile then the region generation logic generates and outputs a tile-primitive association indication which indicates an association between the tile and the primitive, i.e. indicating that the primitive bounding box for the primitive is present in the tile. In this way, the region generation logic 212 outputs, for each tile within the bounding box of the primitive block, one tile-primitive association indication for each primitive whose primitive bounding box is present within that tile.

As mentioned above, the region generation logic 212 operates on one primitive at a time, i.e. one primitive per clock cycle. It would not be trivial to modify the region generation logic 212 to operate on more than one primitive per clock cycle. This is because 'the primitive' is the fundamental unit of work for the region generation logic 212. In order to do more work faster, there would need to be more primitives at the region generation logic 212 to process. Those primitives would need to come from the upstream geometry pipeline(s) 204, which also (collectively) work on one primitive per clock. Furthermore, even if multiple primitives per clock cycle could be fed from the geometry pipeline(s) 204 into the region generation logic 212, the control logic to manage the algorithm and internal data structures of the region generation logic 212 to process two primitives in parallel would be complex.

Each of the tile-primitive association indications that are output from the region generation logic 212 is passed to one of the tile pipelines 214. For example, there may be a fixed mapping between tiles and tile pipelines, e.g. such that tile-primitive association indications relating to tiles with even x addresses in the rendering space are provided to the first tile pipeline 214₁, and tile-primitive association indications relating to tiles with odd x addresses in the rendering space are provided to the second tile pipeline 214₂. The tile pipelines 214 operate in parallel with each other.

In each of the tile pipelines 214, the tiling refinement logic 216 receives the tile-primitive association indications from the region generation logic, and determines for each of the received tile-primitive association indications whether the primitive to which the tile-primitive association indication relates is present within the tile to which the tile-primitive association indication relates. It is noted that a primitive's bounding box may be present in a tile without the primitive itself being present in the tile, so the region generation logic 212 will generate some tile-primitive association indications for which the primitive related to the tile-primitive association indication is not present in the tile related to the tile-primitive association indication. Techniques for determining whether a primitive is within a tile are known in the art and may be referred to as "perfect tiling" techniques. If the tiling refinement logic 216 determines that the primitive to which a tile-primitive association indication relates is present within the tile to which the tile-primitive association indication relates then that tile-primitive association indication is passed to the accumulator module 218. However, if the tiling refinement logic 216 determines that the primitive to which a tile-primitive association indication relates is not present within the tile to which the tile-primitive association indication relates then that tile-primitive association indication is removed from further processing, i.e. it is not passed to the accumulator module 218.

In each tile pipeline 214, the accumulator module 218 accumulates, over a number of clock cycles, the results from the tiling refinement logic 216 to form a primitive mask for the tile (which may be referred to as a "tile-primitive mask") in respect of the current primitive block. The primitive mask for a primitive block for a tile indicates which of the primitives of the primitive block are present in the tile. The tile-primitive masks determined by the accumulator module 218 of a tile pipeline 214 are passed to the control stream generator module 220 of that tile pipeline 214. The tile-primitive mask for a tile indicates a minimal set of primitives in the primitive block which are in that tile.

For each of the tiles for which a tile-primitive indication (e.g. a tile-primitive mask) is received at the control stream generator module 220 of a tile pipeline 214, the control stream generator module 220 of the tile pipeline 214 formats the data appropriately and includes, in a control stream for that tile, indications of primitives that are present within that tile. For example, a primitive mask relating to a primitive block in respect of a tile may be compressed and written to a control stream for the tile.

Each of the tile pipelines 214 comprises a tail pointer cache 222, which stores, for the tiles for which the tile pipeline 214 is configured to receive tile-primitive association indications from the region generation logic 212, an indication of the location in the control stream for that tile of the data that has been most-recently written to the control stream. The control stream generator module 220 of a tile pipeline 214 uses the tail pointer cache 222 in that tile pipeline 214 to determine where new data (i.e. indications of primitives, e.g. in the form of primitive masks) are to be written into the control stream of a tile.

The control stream generator modules 220 of the tile pipelines 214 request chunks of control stream memory from the page allocation control logic 224. The page allocation control logic 224 interfaces with the memory management module 226 and allocates portions of pages (or "chunks of control stream memory") to the different control streams. The control streams are passed from the control stream generator modules 220 of the tile pipelines 214 to the memory for storage therein in accordance with the allocation of the chunks of control stream memory from the page allocation control logic 224. The memory management module 226 is external to the tiling module 210 and is responsible for managing the allocation of pages of memory (e.g. in memory 108) for the storage of the control streams (from the tiling module 210) and for the primitive blocks (from the geometry pipelines 204).

As described above, in the fragment processing phase of a rendering process, the fragment processing logic 106 reads the control stream for a tile from the memory 108 to determine which primitives are present within the tile. The fragment processing logic 106 reads the primitive data from the memory 108 for those primitives which are present within the tile, as indicated by the control stream for the tile. The fragment processing logic 106 then performs fragment processing, which may for example involve: (i) performing rasterisation on the primitives to determine primitive fragments representing the primitives at discrete sample positions within the tile, (ii) performing hidden surface removal on the primitive fragments to remove fragments which are occluded, e.g. by other fragments in the scene, and (iii) performing fragment shading and/or texturing on the remaining fragments to determine an appearance at each sample position of the tile. Each pixel of an image being rendered may correspond to one or more of the sample positions. The rendered pixel values for a tile can be stored, e.g. in a frame buffer. When all of the tiles have been processed in the fragment processing phase, the rendered pixel values for all of the tiles of the rendering space can be output and used to represent an image. The image may be used in any suitable manner, e.g. the image may be stored, displayed on a display and/or transmitted to another device, e.g. over a network such as the internet.

In general, it would be beneficial to increase the performance of the GPU. One way to do this would be to reduce the latency with which the geometry processing can be performed. For example, adding more geometry pipelines to the geometry processing logic may increase the speed at which the geometry processing logic can perform the geometry processing on a sequence of primitives. However, for many common types of workload (e.g. for workloads involving lots of small primitives), a bottleneck in the system described above with reference to Figure 2 is caused by the limit of sending just one primitive per clock cycle from the geometry-tiling arbiter 208 to the region generation logic 212 of the tiling module 210. This limit is due to the region generation logic 212 only being able to process one primitive per clock cycle. If the bottleneck in the system is the inability of the region generation logic 212 to process more than one primitive per clock cycle then adding more geometry pipelines 204 will not improve the performance of the GPU (i.e. it will not increase the speed at which primitives can be processed through the geometry processing phase), and will instead just increase the size (e.g. the silicon area) of the GPU, with little or no benefit.

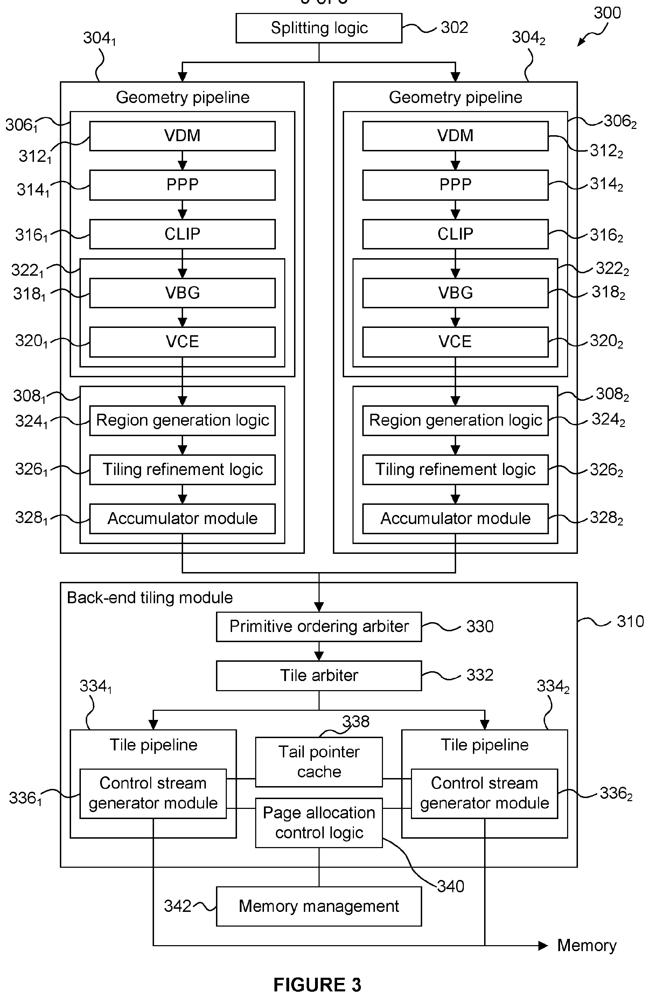

Figure 3 shows geometry processing logic 300 of a graphics processing unit according to a first improvement described herein. In the geometry processing logic 300 the functionality of the tiling module is split into a plurality of instances of a tiling front-end module and a tiling back-end module. The tiling front-end modules include the region generation logic, whilst the tiling back-end module comprises the control stream generator module. An instance of the tiling front-end module is implemented in each of the geometry pipelines, whereas the tiling back-end module receives the outputs from the multiple geometry pipelines. By including the tiling front-end modules in the geometry pipelines, the performance of the geometry processing logic can be scaled by adding more geometry pipelines. In particular, although each instance of the region generation logic (in each geometry pipeline) may be limited to processing one primitive per clock cycle, since there are multiple geometry pipelines, the performance of the geometry processing logic 300 as a whole is not limited to processing just one primitive per clock cycle.

The geometry processing logic 300 could be implemented as the geometry processing logic 104 in the GPU 102 shown in Figure 1. The geometry processing logic 300 comprises splitting logic 302 and a plurality of geometry pipelines 304. In the example shown in Figure 3 the geometry processing logic 300 comprises two geometry pipelines (304₁ and 304₂), but in other examples there may be more geometry pipelines in the geometry processing logic. Each of the geometry pipelines 304 comprises one or more geometry processing modules 306 which are configured to perform respective geometry processing functions. In this example, each of the geometry pipelines 304 also comprises a tiling front-end module 308. The geometry processing logic 300 also comprises a tiling back-end module 310 which is configured to receive the outputs from the tiling front-end modules 308 of each of the geometry pipelines 304.

In the example shown in Figure 3, the one or more geometry processing modules 306 of each of the geometry pipelines 304 comprise: a vertex data master module (VDM) 312, a primitive processing module (PPP) 314, a clipping module (CLIP) 316, a vertex block generator module (VBG) 318, and a vertex compression module (VCE) 320. The combination of the VBG 318 and the VCE 320 can be considered to be a block generator module 322 which is configured to generate primitive blocks. In other examples, the one or more geometry processing modules might comprise different modules to those shown in Figure 3.

Each of the tiling front-end modules 308 includes region generation logic 324, tiling refinement logic 326 and an accumulator module 328. The region generation logic 324 is configured to perform the same functions as the region generation logic 212 described above; the tiling refinement logic 326 is configured to perform the same functions as the tiling refinement logic 216 described above; and the accumulator module 328 is configured to perform the same functions as the accumulator module 218 described above.

The tiling back-end module 310 comprises a primitive ordering arbiter 330, a tile arbiter 332, a plurality of tile pipelines 334, a tail pointer cache 338 and page allocation control logic 340. Each of the tile pipelines 334 comprises a control stream generator module 336 which is configured to perform the same functions as the control stream generator module 220 described above. In the example shown in Figure 3 the tiling back-end module 310 comprises two tile pipelines (334₁ and 334₂), but in other examples there may be more tile pipelines in the tiling back-end module. The geometry processing logic 300 also comprises a memory management module 342.

The 'modules', 'units' and 'logic', and the arbiters, described herein may be implemented in software, hardware or any combination thereof. As mentioned above with reference to the geometry processing logic 200, many of the functions performed by the geometry processing logic 300 need to be repeated many times in order to render an image, e.g. many different primitives (e.g. millions or billions of primitives) may be processed, and the functions do not need to change, so it may be beneficial to implement most of the functions performed by the geometry processing logic 300 in hardware.

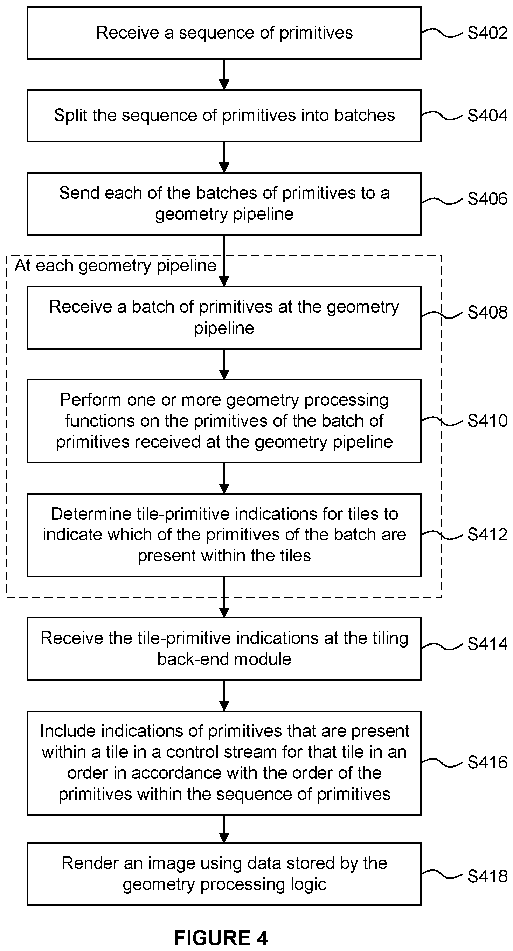

Figure 4 is a flow chart for a method of processing a sequence of primitives in a graphics processing unit 102 in which the geometry processing logic 300 is implemented. The graphics processing unit is configured to perform tile-based rendering, i.e. it is configured to use a rendering space which is sub-divided into a plurality of tiles.

A draw call is received at the GPU. A draw call includes the information that the GPU needs in order to render at least part of an image. For example, a draw call includes a sequence of primitives representing objects in a scene to be rendered. In step S402 the sequence of primitives is received at the splitting logic 302. The order of the primitives within the sequence of primitives can affect the appearance of the rendered image that the GPU produces.

In step S404 the splitting logic 302 splits the sequence of primitives into batches of primitives. The order of the primitives in the sequence of primitives is maintained in the batches of primitives. Each batch of primitives is associated with an indication of its position according to the order of the primitives within the sequence of primitives. The batches may, or may not, all include the same number of primitives.

In step S406 the splitting logic 302 sends the batches of primitives to the geometry pipelines 304. In particular, each batch of primitives is sent to one of the geometry pipelines 304. The splitting logic 302 can determine which of the geometry pipelines 304 to send each of the batches of primitives to according to any suitable scheme, e.g. a round robin scheme or a load balancing scheme. A load balancing scheme may maintain a count of credits for each of the geometry pipelines 304 and may use the counts to determine the least full geometry pipeline to select next. The splitting logic 302 associates each of the batches of primitives with an indication of its position (i.e. its order) according to the order of the primitives within the sequence of primitives. As mentioned above, the indication of the position of a batch of primitives may be referred to as a Pipeline Interleave Marker (PIM). For each of the batches of primitives, the splitting logic 302 sends that batch of primitives to one of the geometry pipelines 304 with the indication of its position according to the order of the primitives within the sequence of primitives. The geometry pipelines 304 are configured to receive the batches of primitives of the sequence of primitives from the splitting logic 302.

Steps S408 to S412 are performed at each of the geometry pipelines 304. The geometry pipelines 304 are configured to operate in parallel on different batches of primitives.

In step S408 the geometry pipeline 304 receives a batch of primitives from the splitting logic 302.

In step S410, the geometry processing module(s) 306 of the geometry pipeline 304 perform geometry processing functions on the primitives of a batch of primitives received at the geometry pipeline 304. For example, the vertex data master module 312 (which may be a dedicated data master module for vertex/geometry processing tasks, or may be, or may be part of, a more general data master module handling other types of tasks too) may schedule tasks to be executed for executing geometry shader programs in respect of vertices of the primitives. The primitive processing module 314 may perform primitive processing tasks, such as assembling the shaded vertices into primitives and performing initial setup for subsequent modules. The clipping module 316 may perform clipping and/or culling on the primitives, e.g. to clip the primitives so that they do not extend outside of the rendering space and/or to cull primitives which are not present in the rendering space. The vertex block generator module 318 may group the vertex data for the primitives into groups which can be included in primitive blocks. The vertex compression module 320 may compress the data within a primitive block. The compressed primitive blocks are stored in a buffer (which may be referred to as a "parameter buffer") in the memory 108. The position data for the primitives, i.e. the position data for the vertices of the primitives, in the rendering space is stored in an internal buffer in the GPU (e.g. in the geometry pipeline 304) for use by the tiling front-end module 308. Primitive data other than the position data, such as attribute data (which may be referred to as "varyings"), does not need to be stored in the internal buffer and does not need to be used by the tiling front-end module. The internal buffer may be implemented as a First-In-First-Out (FIFO) buffer, and may be referred to as a "geometry buffer".

As mentioned above, the combination of the vertex block generator module 318 and the vertex compression module 320 may be considered to be a block generator module 322. In some examples, the block generator module might not comprise both of a vertex block generator module and a vertex compression module, e.g. the primitive blocks might not be compressed and the block generator module might not comprise a vertex compression module. In general, the block generator module 322 of a geometry pipeline 304 generates primitive blocks, wherein each of the primitive blocks includes primitive data representing a set of one or more primitives. For example, a primitive block might include vertex data describing vertices, and a set of vertex indices for each of the primitives included in the primitive block to indicate which of the vertices are part of the primitive. It is noted that often primitives share vertices with other primitives, e.g. if the primitives form a mesh, such that storing the vertex data once in a primitive block and having the sets of vertex indices for the different primitives is often a more efficient way of storing the primitive data compared to storing the vertex data for each primitive separately. Other data (e.g. state data and primitive type data) can also be shared between primitives in a primitive block. There may be a maximum number of primitives (e.g. 80) that can be included in a single primitive block, and there may be a maximum number of vertices (e.g. 64) that can be included in a single primitive block. The block generator module 322 (e.g. the VBG 318) may add primitives to a primitive block in the order in which the primitives are received at the block generator module 322 until no more primitives can be included in the primitive block (e.g. because the maximum number of vertices for a primitive block has been reached or because the maximum number of primitives for a primitive block has been reached). Then further primitives can be added to a new primitive block, and so on, until all of the primitives that are received at the block generator module 322 have been included in a primitive block.

The block generator module 322 of each of the geometry pipelines 304 determines a bounding box for each of the primitive blocks. The bounding box for a primitive block indicates a region of the rendering space which wholly encompasses all of the primitives in the primitive block. The bounding box for a primitive block may be an axis-aligned bounding box, i.e. it may be a rectangle in the rendering space with sides that are parallel to the x and y axes of the rendering space. The bounding box for a primitive block may be at a tile-granularity, i.e. for each tile in the rendering space the bounding box for a primitive block either wholly includes the tile or does not include any part of the tile. In other words, when the bounding box for a primitive block is at a tile-granularity, there are no tiles in the rendering space for which the bounding box covers some but not all of the region defined by the tile. The bounding box for a primitive block may tightly bound the primitives within the primitive block, e.g. it may be the smallest axis-aligned box having a tile-granularity which wholly encompasses all of the primitives in the primitive block. One way to determine the bounding box for a primitive block, is to identify the minimum and maximum values of the x components of the locations of the tiles in which the vertices of the primitives in the primitive block are present; identify the minimum and maximum values of the y components of the locations of the tiles in which the vertices of the primitives in the primitive block are present; and then determine the bounding box of the primitive block to be an axis-aligned box spanning the tiles from the identified minimum tile location in the x direction to the identified maximum tile location in the x direction and spanning the tiles from the identified minimum tile location in the y direction to the identified maximum tile location in the y direction.

The vertex data master module 312, the primitive processing module 314 and the clipping module 316 may operate on one primitive per clock cycle. The block generator module 322 accumulates primitives into primitive blocks, wherein it can take multiple clock cycles to accumulate multiple primitives into the primitive blocks. The peak aggregate throughput of the block generator module 322 is one primitive per clock cycle, but the throughput may vary in dependence on a number of factors, such as the amount of data associated with each vertex.

In step S412 the tiling front-end module 308 of each of the geometry pipelines 304 determines, for each tile of a set of one or more tiles, one or more tile-primitive indications indicating which of the primitives of the batch of primitives received at the geometry pipeline are present within that tile. The "set of one or more tiles" may include all or a subset of the tiles of the rendering space. For example, the "set of one or more tiles" may include those tiles which are included in a bounding box for one of the primitive blocks generated from the batch of primitives. The tiling front-end module 308 may operate on a primitive block at a time, and may receive the indications of the positions of the primitives (e.g. the positions of the vertices) in the primitive block (that were stored by the block generator module 322) and may also receive the bounding box of the primitive block (that was determined by the block generator module 322). As an example, the tiling front-end module 308 may determine, for each tile of the rendering space in the bounding box for a primitive block, which of the primitives of that primitive block are present within that tile. The tile-primitive indications which are determined by the tiling front-end module 308 may indicate, for the tiles in the bounding box for a primitive block, the primitives of the primitive block which are determined to be present within that tile.

The tile-primitive indications which are determined by the tiling front-end module 308 may take any suitable form. For example, the tile-primitive indication(s) for a tile may include a tile-primitive indication for each of the primitive blocks which includes a primitive that is present in the tile. In particular, the one or more tile-primitive indications for a tile determined by the tiling front-end module 308 of a geometry pipeline 304 may comprise a tile-primitive mask for each of the primitive blocks indicating which of the primitives of the primitive block are present within that tile.

The tiling front-end module 308 of each of the geometry pipelines 308 comprises region generation logic 324. The region generation logic 324 receives the data relating to a primitive block (e.g. an indication of the bounding box of the primitive block, and the positions of the vertices of the primitives in the primitive block) and may store this data in a buffer. The region generation logic 212 processes each tile within the bounding box of the primitive block. In particular, in examples described herein, in step S412, the region generation logic 324 of a tiling front-end module 308 determines, for each tile of the rendering space in the bounding box for a primitive block, a tile-primitive association indication for each of the primitives of the primitive block that has a primitive bounding box that is present within that tile. The primitive bounding box for a primitive indicates a region of the rendering space which wholly encompasses that primitive. The primitive bounding box for a primitive may be an axis-aligned bounding box, i.e. it may be a rectangle in the rendering space with sides that are parallel to the x and y axes of the rendering space. The primitive bounding box for a primitive may be at a tile-granularity, i.e. for each tile in the rendering space the primitive bounding box for a primitive either wholly includes the tile or does not include any part of the tile. In other words, when the primitive bounding box for a primitive is at a tile-granularity, there are no tiles in the rendering space for which the primitive bounding box covers some but not all of the region defined by the tile. In other examples, the primitive bounding box for a primitive might not be at tile-granularity, in which case the primitive bounding box might include some but not all of a tile. The primitive bounding box for a primitive may tightly bound the primitive, e.g. it may be the smallest axis-aligned box having a tile-granularity which wholly encompasses primitive in the rendering space. One way to determine the primitive bounding box for a primitive, is to identify the minimum and maximum values of the x components of the locations of the tiles in which the vertices of the primitive are present; identify the minimum and maximum values of the y components of the locations of the tiles in which the vertices of the primitive are present; and determine the primitive bounding box of the primitive to be an axis-aligned box spanning the tiles from the identified minimum tile location in the x direction to the identified maximum tile location in the x direction and spanning the tiles from the identified minimum tile location in the y direction to the identified maximum tile location in the y direction.

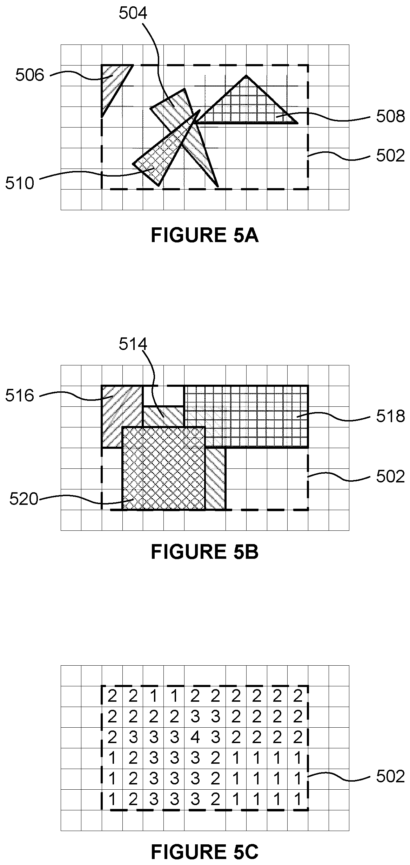

Figure 5A shows a region of the rendering space including 14 columns and 8 rows of tiles. Four primitives 504, 506, 508 and 510 of a primitive block are shown in Figure 5A within this region of the rendering space. The bounding box of the primitive block is shown with the dashed line 502. It can be seen that the bounding box of the primitive block is the smallest axis-aligned box having a tile-granularity which wholly encompasses all of the primitives in the primitive block.

Figure 5B shows the same region of the rendering space as shown in Figure 5A, and the bounding box 502 of the primitive block is also shown in Figure 5B. Figure 5B shows the primitive bounding boxes 514, 516, 518 and 520 of the four primitives 504, 506, 508 and 510 shown in Figure 5A. It can be seen that the primitive bounding box of each of the primitives is the smallest axis-aligned box having a tile-granularity which wholly encompasses that primitive.

For each tile within the bounding box of the primitive block, the region generation logic 324 performs a test for each of the primitives of the primitive block to determine whether the primitive bounding box for the primitive is present in the tile. If it is determined that the primitive bounding box of a primitive is present in a tile then the region generation logic 324 generates and outputs a tile-primitive association indication which indicates an association between the tile and the primitive, i.e. indicating that the primitive bounding box for the primitive is present in the tile. In this way, the region generation logic 324 outputs, for each tile within the bounding box of the primitive block, one tile-primitive association indication for each primitive whose primitive bounding box is present within that tile. With reference to the example shown in Figures 5A and 5B, when the region generation logic 324 processes the primitive block having the bounding box 502, a tile-primitive association indication will be output from the region generation logic 324 in respect of the primitive 504 for each of the 20 tiles which are covered by the primitive bounding box 514; a tile-primitive association indication will be output from the region generation logic 324 in respect of the primitive 506 for each of the 6 tiles which are covered by the primitive bounding box 516; a tile-primitive association indication will be output from the region generation logic 324 in respect of the primitive 508 for each of the 18 tiles which are covered by the primitive bounding box 518; and a tile-primitive association indication will be output from the region generation logic 324 in respect of the primitive 510 for each of the 16 tiles which are covered by the primitive bounding box 520. So when the region generation logic 324 of a geometry pipeline 304 processes the primitive block illustrated in Figures 5A and 5B, a total of 60 tile-primitive association indications will be output from the region generation logic 324 and passed to the tiling refinement logic 326.

It is noted that other examples might not include the tiling refinement logic. The inclusion of the tiling refinement logic 326 is an optimisation which prevents some primitive indications being unnecessarily included in the control streams for the tiles.

In each of the geometry pipelines 304, the tiling refinement logic 326 receives the tile-primitive association indications determined by the region generation logic 324 of that geometry pipeline 304, and determines for each of the received tile-primitive association indications whether the primitive to which the tile-primitive association indication relates is present within the tile to which the tile-primitive association indication relates. As can be seen by comparing Figures 5A and 5B, a primitive's bounding box may be present in a tile without the primitive itself being present in the tile. For example, the primitive bounding box 518 is present in the top right tile of the bounding box 502 for the primitive block, but the primitive 508 to which the primitive bounding box 518 relates is not present in the top right tile of the bounding box 502 for the primitive block. So the region generation logic 324 will generate some tile-primitive association indications for which the primitive related to the tile-primitive association indication is not present in the tile related to the tile-primitive association indication. Techniques for determining whether a primitive is within a tile are known in the art and may be referred to as "perfect tiling" techniques. Perfect tiling techniques tend to involve relatively complex calculations such as division operations, e.g. to test whether an edge passes through a tile. For some primitives it may be possible to bypass the computations involved in performing perfect tiling, e.g. for small primitives which have bounding boxes that are only a single tile wide and/or only a single tile high, then it is known that the primitive is present within all of the tiles that are covered by the primitive's bounding box without having to perform any perfect tiling calculations. As such, the tiling refinement logic 326 may comprise: (i) perfect tiling logic which is configured to perform perfect tiling calculations to determine whether a primitive is within a tile, and (ii) bypass logic which is configured to determine whether the perfect tiling logic can be bypassed, i.e. whether the results of the perfect tiling computation can be inferred (e.g. for small primitives as mentioned above) without needing to perform the calculations involved in the full perfect tiling process.

If the tiling refinement logic 326 of a tiling front-end module 308 determines that the primitive to which a tile-primitive association indication relates is present within the tile to which the tile-primitive association indication relates then that tile-primitive association indication is passed to the accumulator module 328 of the tiling front-end module 308. However, in response to determining that the primitive to which a tile-primitive association indication relates is not present within the tile to which the tile-primitive association indication relates, the tiling refinement logic 326 removes that tile-primitive association indication from further processing, i.e. it is not passed to the accumulator module 328 of the tiling front-end module 308.

In each tiling front-end module 308, the accumulator module 328 receives tile-primitive association indications relating to a tile and relating to primitives of a primitive block, and determines the tile-primitive mask for the primitive block indicating which of the primitives of the primitive block are present within the tile. In this way the accumulator module 328 accumulates, over a number of clock cycles, the results from the tiling refinement logic 326 to form the tile-primitive mask for the tile in respect of the current primitive block. The tile-primitive mask for a primitive block for a tile indicates which of the primitives of the primitive block are present in the tile. The tile-primitive masks determined by the accumulator modules 328 of the tiling front-end modules 308 of the geometry pipelines 304 are passed to the tiling back-end module 310. The tile-primitive mask for a tile indicates a minimal set of primitives in the primitive block which are in that tile.

In each tiling front-end module 308, the region generation logic 324 operates on one primitive at a time, e.g. one primitive per clock cycle. Figure 5C shows an estimate of how many clock cycles it will take the region generation logic and the tiling refinement logic of a tiling front-end module to process each of the tiles within the bounding box 502 of the primitive block shown in Figures 5A and 5B.

The tiling front-end module 308 steps through each tile within the bounding box 502 for the primitive block. If a tile is not covered by any primitive bounding boxes of primitives in the primitive block then the tiling front-end module will move on to the next tile in the next clock cycle. For each tile, the tiling front-end module 308 will run a test (which takes one clock cycle) for each primitive that has a primitive bounding box that covers the tile, to determine whether the primitive is present in the tile.

Therefore, in order to process a primitive block, the tiling front-end module 308 spends:
- 1 clock cycle per tile in the bounding box for the primitive block, and
- an additional 1 cycle for each time that a primitive has a primitive bounding box that covers a tile in the bounding box for the primitive block.
This is illustrated in the example shown in Figure 5C, in which the numbers shown in the tiles represent how many clock cycles it will take for the tiling front-end module 308 to process the primitive block with the bounding box 502. For example, the top left tile in the bounding box 502 takes two clock cycles to process because one of the primitives (primitive 506) has a primitive bounding box 516 which covers the top left tile, so for the top left tile the region generation logic 324 spends a clock cycle to determine that the primitive bounding box 516 is the only primitive bounding box for the primitives in the primitive block which is present in the tile, and then the tiling refinement logic 326 spends a clock cycle to determine whether the primitive 506 is present in the top left tile (which it is in this example). As another example, the tile in the fifth column and third row of tiles of the bounding box 502 will take four clock cycles to process because three of the primitives (primitives 504, 508 and 510) have primitive bounding boxes 514, 518 and 520 which cover that tile, so for that tile the region generation logic 324 spends a clock cycle to determine that the primitive bounding boxes 514, 518 and 520 are present in the tile, and then the tiling refinement logic 326 spends three clock cycles to determine whether the primitives 504, 508 and 510 are present in the tile (which they all are in this example).

The sum of the numbers shown for the tiles in Figure 5C is 120. So to process the primitive block having the primitives shown in Figure 5A, the tiling front-end module 308 will take approximately 120 clock cycles. It is noted that there may be some additional latency on top of the numbers of clock cycles shown in Figure 5C, e.g. due to latency of the particular perfect tiling algorithm that is used in the tiling refinement logic 326.

Table 1 below shows an example format which could be used for a tile-primitive mask for a primitive block. In other examples, the tile-primitive mask may have a different format, e.g. it may have different numbers of bits for the different fields shown in Table 1, and/or it may have different fields to those shown in Table 1. In this example, a primitive block can contain up to a maximum of 80 primitives, and the tile-primitive mask includes a 'mask' bit for each of the primitives of the primitive block which has a value of either 0 or 1 to indicate whether or not that primitive is present in the tile. The tile-primitive mask for the primitive block shown in Table 1 includes 105 bits. The 'Valid', 'Enable' and 'Data Type' fields are used to indicate how the tiling back-end module 310 should process the tile-primitive mask. In particular, in this example, the 'Valid' and 'Enable' fields are hardware flow control signals which are used for hand-shaking between blocks in a pipeline. It is noted that in other examples, the 'Valid', 'Enable' and Data Type' fields might not be included in the tile-primitive mask, or might be altered. The 'Tile X' and 'Tile Y' indicate a position of the tile in the rendering space (at a tile-granularity). With 10 bits being used for each of the Tile X and Tile Y values, this allows for up to 1024 rows of tiles and up to 1024 columns of tiles. As an example, a tile may correspond to a 32x32 block of pixel values. With these example sizes, the format of the tile-primitive masks shown in Table 1 could be used for an image having up to 32,768 rows and 32,768 columns of pixels, which is many more pixels than are needed to render most images (it is noted that a 4K Ultra High Definition TV (UHDTV) image usually has 3840 columns and 2160 rows of pixels). In different examples, a different number of tiles may be included in the rendering space, and each tile may include a different number of pixels.

**Table 1: Example format of a tile-primitive mask for a primitive block**

| **Field** | **Number of bits** |
|---|---|
| Valid | 1 |
| Enable | 1 |
| Data Type | 3 |
| Tile X | 10 |
| Tile Y | 10 |
| Mask | 80 |
| **Total** | **105** |

A tile-primitive mask may be sent from a tiling front-end module 308 to the tiling back-end module 310 in one clock cycle. However, in examples described herein, the interface between the geometry pipelines 304 and the tiling back-end module 310 crosses a physical design boundary, so the wider the interface is the more silicon area it takes up. So it may be beneficial to reduce the size of this interface and send a tile-primitive mask over the interface to the tiling back-end module 310 over multiple clock cycles. This would reduce the width of the interface and save a significant number of pins. For example, if primitive blocks contain on average less than 40 primitives, then it may be beneficial to halve the width of the interface. The width of this interface is a design choice that may be different in different implementations.

Returning to the flow chart of Figure 4, in step S414 the tiling back-end module 310 receives the tile-primitive indications determined by the geometry pipelines 304. As shown in Figure 3, the tiling back-end module 310 receives the tile-primitive indications from the geometry pipelines 304. For example, the tiling back-end module 310 may receive the tile-primitive masks output from the tiling front-end modules 308 of the geometry pipelines 304.

In step S416 for each of the tiles for which a tile-primitive indication is received in step S414, the tiling back-end module 310 includes indications of the primitives that are present within that tile in a control stream for that tile in an order in accordance with the order of the primitives within the sequence of primitives.

As described above, the geometry pipelines 304 operate in parallel on different batches of primitives, and output data to the tiling back-end module 310. The time it takes for a geometry pipeline 304 to process a batch of primitives is highly variable, for example depending on the type of geometry processing that is performed on the primitives (e.g. depending on whether complex geometry shader programs are executed in respect of the primitives, and depending on how many of the primitive bounding boxes are present within the tiles, as explained above with reference to Figure 5C). As such, it is possible (in fact, likely) that the data for the batches of primitives received at the tiling back-end module 310 is in a different order to the order of the primitives in the sequence of primitives received at the splitting logic 302. However, it is important that the original order of the primitives within the received sequence of primitives is maintained when primitive indications are added to the control streams for the tiles. This is because the order in which primitives are processed in the fragment processing logic 106 can affect the appearance of the final rendered image (e.g. when overlapping translucent primitives are processed). As described above, each of the batches of primitives that are passed to the geometry pipelines 304 is associated with an indication of its position (i.e. its order) according to the order of the primitives within the sequence of primitives. These indications of the ordering of the batches of primitives are passed to the primitive ordering arbiter 330. The primitive ordering arbiter 330 of the tiling back-end module 310 receives the tile-primitive indications (e.g. the tile-primitive masks) determined by the geometry pipelines 304, and orders the received tile-primitive indications in accordance with the indications of the positions of the batches of primitives. In this way, the indications of the positions of the batches of primitives according to the order of the primitives within the sequence of primitives (the PIMs) are used to ensure the correct order is maintained when the tile-primitive indications from the geometry pipelines 304 are joined. The primitive ordering arbiter 330 passes the ordered tile-primitive indications (e.g. the tile-primitive masks) to the tile arbiter 332. In this way, the tile-primitive indications are provided to the tile arbiter 330 in accordance with the submission order of the primitives in the original draw call.

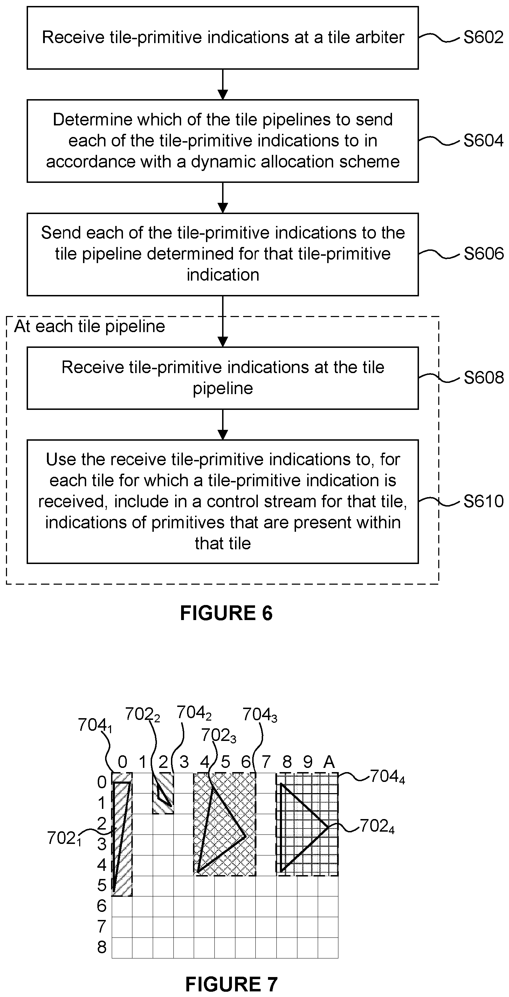

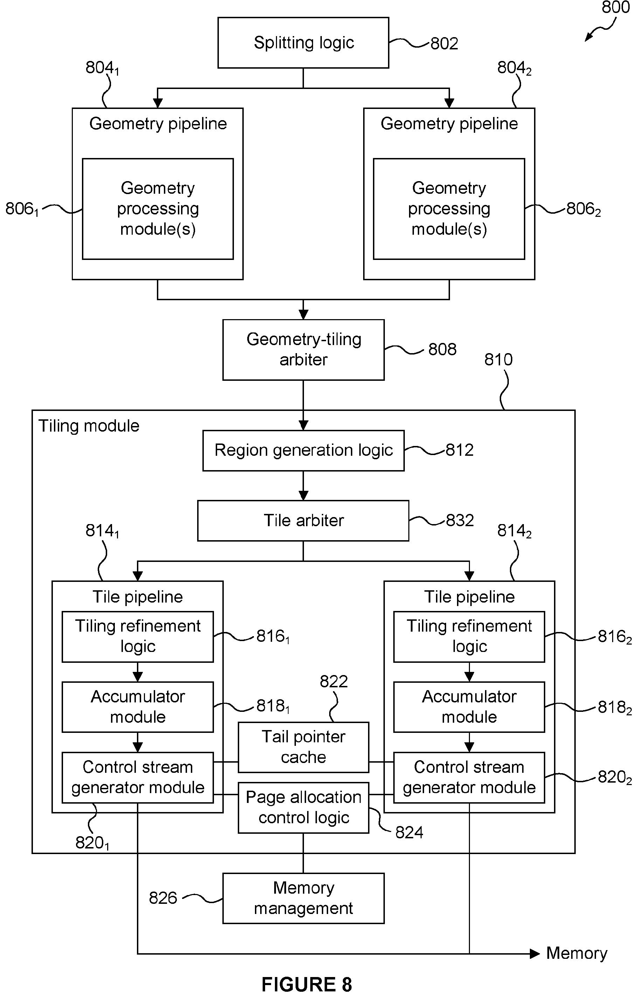

Figure 6 is a flow chart for a method of processing primitives to perform tiling in a graphics processing unit. The steps shown in Figure 6 are an example of how step S416 can be implemented at the tiling back-end module 310. As explained in more detail below with reference to Figure 8, in other examples, the method shown in Figure 6 may be implemented in a tiling module which has not been split into front-end and back-end modules, but we first describe the example in which the method shown in Figure 6 is performed by the tiling back-end module 310 shown in Figure 3.

In step S602 the tile arbiter 332 receives tile-primitive indications. As described above, each of the tile-primitive indications indicates an association between a tile and a set of one or more primitives. For example, the one or more tile-primitive indications for a tile may comprise tile-primitive masks for primitive blocks indicating which of the primitives of the primitive blocks are present within that tile.

As described above, the tiling back-end module 310 comprises a plurality of tile pipelines 334, and each of the tile pipelines 334 comprises a control stream generator module 336. In step S604, the tile arbiter 332 determines which of the tile pipelines to send each of the tile-primitive indications to. In general, in the method shown in Figure 4, the tile arbiter 332 may determine which of the tile pipelines 334 to send each of the tile-primitive indications to in accordance with any suitable allocation scheme which may, or may not, have a fixed mapping between tiles and tile pipelines 334. However, in the example shown in Figure 6, the tile arbiter 332 determines which of the tile pipelines to send each of the tile-primitive indications to in accordance with a dynamic allocation scheme which does not have a fixed mapping between tiles and tile pipelines.

In step S606 the tile arbiter 332 sends each of the tile-primitive indications to the tile pipeline 334 that was determined for that tile-primitive indication in step S604. In this way the tile arbiter 332 distributes the tile-primitive indications to the tile pipelines 334 in accordance with the dynamic allocation scheme.

Steps S608 and S610 are performed at each of the tile pipelines 334. The tile pipelines 334 operate in parallel with each other on different tile-primitive indications. In step S608 each of the tile pipelines 334 receives the tile-primitive indications that are sent to that tile pipeline 334 by the tile arbiter 332.

In step S610 each of the tile pipelines 334 uses the received tile-primitive indications to, for each of the tiles for which a tile-primitive indication is received at the tile pipeline 334, include in a control stream for that tile, indications of primitives that are present within that tile. In particular, each of the tile pipelines 334 comprises a control stream generator module 336 which is configured to, for each of the tiles for which it receives a tile-primitive indication, include indications of the primitives that are present within that tile in the control stream for that tile. In particular, for each of the tiles for which a tile-primitive indication (e.g. a primitive mask) is received at a tile pipeline 334, the control stream generator module 336 of the tile pipeline 334 formats the data appropriately and includes, in a control stream for that tile, indications of primitives that are present within that tile. For example, a primitive mask relating to a primitive block in respect of a tile may be compressed and written to a control stream for the tile.

In examples where the tile arbiter 332 determines which of the tile pipelines to send each of the tile-primitive indications to in accordance with a dynamic allocation scheme which does not have a fixed mapping between tiles and tile pipelines, then different tile-primitive indications for the same tile may be sent to different tile pipelines 334. In the example shown in Figure 3, in order to ensure that the primitive indications are included in the correct order in the control streams for the tiles, the tile pipelines 334 are configured to use a common tail pointer cache 338 (rather than having separate, independent tail pointer caches in the different tile pipelines, as in Figure 2 in which there is a fixed mapping between tiles and tile pipelines). The tail pointer cache 338 of the tiling back-end module 310 may be referred to as a 'shared tail pointer cache' or a 'common tail pointer cache'. This is because all of the tile pipelines 334 are configured to read and write data for the control streams of all of the tiles of the rendering space from and to the tail pointer cache 338. The tail pointer cache 338 is configured to store, for each of the tiles of the rendering space, an indication of the location in the control stream for the tile of the data that is most-recently written to the control stream. The control stream generator modules 336 of the tile pipelines 334 use the tail pointer cache 338 to determine where new data (i.e. indications of primitives, e.g. in the form of primitive masks) are to be written into the control stream of a tile.

The tail pointer cache 338 comprises tile-locking logic which ensures that no more than one of the tile pipelines 338 processes data relating to the same tile at any given time. In particular, the tile-locking logic prevents a read for the same tile in respect of a later primitive block from being processed before the tile has been updated when referenced in a previous primitive block. This prevents geometry loss which could occur due to control stream overwrite if multiple tile pipelines 334 were attempting to read and write data to the same control stream at the same time. A person skilled in the art would know how to implement suitable tile-locking logic for this purpose, so for conciseness further details of how the tile-locking logic could operate are not provided herein.

The control stream generator modules 336 of the tile pipelines 334 request chunks of control stream memory from the page allocation control logic 340. The page allocation control logic 340 interfaces with the memory management module 342 and allocates portions of pages (or "chunks of control stream memory") to the different control streams. The control streams are passed from the control stream generator modules 336 of the tile pipelines 334 to the memory for storage therein in accordance with the allocation of the chunks of control stream memory from the page allocation control logic 340. The memory management module 342 is external to the tiling back-end module 310 and is responsible for managing the allocation of pages of memory (e.g. in memory 108) for the storage of the control streams (from the tiling back-end module 310) and for the primitive blocks (from the geometry pipelines 304). In particular, the control streams and the primitive blocks are stored in a buffer (which may be referred to as the "intermediate parameter buffer") in the memory 108 as an output of the geometry processing phase of the rendering process.

In step S418 the fragment processing logic 106 of the GPU 102 performs the fragment processing phase of the rendering process. In particular, the fragment processing logic 106 renders an image using the data stored in the buffer by the geometry processing logic. As described above, the data stored in the buffer comprises primitive data (e.g. in primitive blocks) which results from performing the geometry processing functions at the one or more geometry processing modules 306 of each of the geometry pipelines 304. Furthermore, the data stored in the buffer comprises the control streams for the tiles of the rendering space.

As described above, in the fragment processing phase of a rendering process, the fragment processing logic 106 reads the control stream for a tile from the memory 108 to determine which primitives are present within the tile. The fragment processing logic 106 reads the primitive data in the primitive blocks from the memory 108 for those primitives which are present within the tile, as indicated by the control stream for the tile. The fragment processing logic 106 then performs fragment processing, which may for example involve: (i) performing rasterisation on the primitives to determine primitive fragments representing the primitives at discrete sample positions within the tile, (ii) performing hidden surface removal on the primitive fragments to remove fragments which are occluded, e.g. by other fragments in the scene, and (iii) performing fragment shading and/or texturing on the remaining fragments to determine an appearance at each sample position of the tile. Each pixel of an image being rendered may correspond to one or more of the sample positions. The rendered pixel values for a tile can be stored, e.g. in a frame buffer. When all of the tiles have been processed in the fragment processing phase, the rendered pixel values for all of the tiles of the rendering space can be output and used to represent an image. The image may be used in any suitable manner, e.g. the image may be stored, displayed on a display and/or transmitted to another device, e.g. over a network such as the internet.

It can be seen that in the method shown in Figure 4, the tiling module is split into a tiling front-end module 308 and a tiling back-end module 310, with an instance of the tiling front-end module 308 being included in each of the geometry pipelines 304. The tiling front-end module 308 includes the region generation logic 324. Therefore, the performance of the geometry processing logic 300 can be scaled by adding more geometry pipelines, and the limit of the region generation logic 324 only being able to process one primitive per clock cycle does not prevent this scaling from increasing the throughput of the geometry processing logic. The tiling back-end module 310 is configured to receive the outputs from the tiling front-end modules and to order the data according to the ordering of the primitives in the sequence of primitives, and then to process the data with the control stream generator modules to thereby include primitive indications in the control streams in the correct order. In other words, the tiling back-end module 310 is implemented as a single unit after the PIM rationalisation point, i.e. it is not included in the respective geometry pipelines. The splitting of the tiling module into front-end and back-end modules as described above can avoid the bottleneck of one primitive per clock cycle in outputting data from the geometry pipelines. In particular, the interface between the geometry pipelines 304 and the tiling back-end module 310 can transfer a tile-primitive mask for a tile per clock cycle (rather than a primitive per clock cycle as in the system shown in Figure 2). For example, if a primitive block has 80 primitives which are all present within a tile then data for all 80 primitives can be transferred to the tiling back-end module 310 in respect of the tile in one clock cycle. This is particularly beneficial when the majority of the primitives are small and only present in a small number of tiles. Even for large primitives the system shown in Figure 3, in which the tiling module is split into tiling front-end modules and a tiling back-end module, is no worse than the system shown in Figure 2 in which the tiling module is not split. This is because for large primitives the interface in Figure 2 between the geometry-tiling arbiter 208 and the tiling module 210 is not the limiting factor on the performance. For large primitives, the same amount of work has to be performed in the system as a whole irrespective of whether the tiling module is split into front and back end modules, and it is the amount of work that is the limiting factor on the performance of the system when it is processing predominantly large primitives which each cover a large number of tiles.

In the method shown in Figure 6, the tile arbiter allocates the tile-primitive indications to the tile pipelines in accordance with a dynamic allocation scheme, rather than having a fixed mapping between tiles and tile pipelines. In this way, work is allocated to the tile pipeline 334 dynamically in a flexible manner. This can help to balance the workloads between the different tile pipelines. As an example, the dynamic allocation scheme may be a round robin scheme, e.g. in which the tile arbiter cycles through each of the tile pipelines in turn when determining which of the tile pipelines to send each of the tile-primitive indications to. As another example, the dynamic allocation scheme may be a load balancing scheme, e.g. in which the tile arbiter 332 determines how much work each of the tile pipelines 334 currently has and chooses to send the next tile-primitive indication to the tile pipeline that has the least amount of work. For example, the tile arbiter 332 may maintain a count of the number of tiles in flight on each of the tile pipelines 334, and may decide to send tile-primitive indications for the next tile to the tile pipeline with the lowest number of tiles in flight according to the counts. When tile-primitive indications for a new tile are sent to a tile pipeline then the count of the number of tiles in flight for that tile pipeline is incremented, and when a tile pipeline 334 finishes processing the tile-primitive indications for a tile it can send an indication of this to the tile arbiter 332 which will then decrement the count of the number of tiles in flight for that tile pipeline. In general, a round robin allocation scheme will be simpler to implement than a load balancing allocation scheme, but a round robin allocation scheme will normally be less effective at balancing the workloads across the tile pipelines when compared to the load balancing allocation scheme.

As described above, the system shown in Figure 2 may have a fixed mapping between tiles and tile pipelines, whereby work for tiles with an even tile x address are sent to the first tile pipeline 214₁ and work for tiles with an odd tile x address are sent to the second tile pipeline 214₂. In another system, a tiling module with four tile pipelines could use a similar approach but with a fixed mapping of tiles within each 2x2 block of tiles to the four respective tile pipelines. In these systems having a fixed mapping between tiles and tile pipelines, each tile pipeline always processes data for the same tiles for all of the primitives, and each tile pipeline can operate independently using its own local tail pointer cache and can ensure that the submission order is maintained within the control streams for the tiles that it is responsible for. In other words, when a fixed mapping between tiles and tile pipelines is used, each tile pipeline does not need to consider what is happening in tiles that are not (i.e. never) mapped to it. This fixed mapping is simple to implement, but it can lead to imbalances in the workloads on the different tile pipelines, which can lead to inefficiencies, e.g. if one tile pipeline has lots of work to do, while another tile pipeline has no work to do and is idle. Figure 7 shows an example of a situation where a fixed mapping between tiles and tile pipelines will result in a large imbalance in the work performed by the different tile pipelines in a system which has two tile pipelines (such as the system shown in Figure 2). In particular, Figure 7 shows four primitives 702₁, 702₂, 702₃ and 702₄, and their primitive bounding boxes 704₁, 704₂, 704₃ and 704₄ within a rendering space having 11 columns and 9 rows of tiles.

The primitives shown in Figure 7, and their primitive bounding boxes, are present mostly in tiles with even x addresses, and less so in tiles with odd x addresses. In particular, primitive 702₁ and its primitive bounding box 704₁ are present only in tiles with an x address of 0 (i.e. an even x address); primitive 702₂ and its primitive bounding box 704₂ are present only in tiles with an x address of 2 (i.e. an even x address); primitive 702₃ and its primitive bounding box 704₃ are present in tiles with x addresses of 4, 5 and 6 (i.e. approximately two third of the tiles have even x addresses); primitive 702₄ and its primitive bounding box 704₄ are present in tiles with x addresses of 8, 9 and A (i.e. approximately two third of the tiles have even x addresses). So the tile pipeline 214₁ will perform much more work than the tile pipeline 214₂ when a fixed mapping is used to send work for tiles with even x addresses to tile pipeline 214₁ and to send work for tiles with odd x addresses to tile pipeline 214₂. This may leave the tile pipeline 214₂ idle at times with no work to do, which leads to inefficiencies, thereby increasing the latency of the geometry processing logic.

In contrast, by allocating work to the tile pipelines flexibly using a dynamic allocation scheme as described above with reference to Figure 6 (without having a fixed mapping between tiles and tile pipelines), work is allocated to the tile pipelines in a balanced way regardless of the addresses of the tiles (e.g. regardless of the tiles covered by the primitives and the primitive bounding boxes). As described above, in the example shown in Figure 3, the tile arbiter 332 may dynamically allocate work for each of tiles as it is presented from the primitive ordering arbiter 330 to one of the tile pipelines 334. The use of a single, global tail pointer cache 338 that is shared by the different tile pipelines 334 allows different tile pipelines to work on the same tiles (for different primitive blocks), and the tail pointer cache 338 can correctly maintain the tail pointers for the different control streams as they are updated by the different tile pipelines 334. Furthermore, having a global tail pointer cache is generally more area efficient than having multiple tail pointer caches that are local to each tile pipeline (as shown in the system of Figure 2).

At a high level, two significant improvements to the geometry processing logic have been described above: (i) the splitting of the tiling module into tiling front-end modules and a tiling back-end module (where the tiling front-end modules are included in the geometry pipelines), and (ii) the dynamic allocation of work to tile pipelines which does not have a fixed mapping between tiles and tile pipelines. These two improvements can be implemented together or separately. The description provided above with reference to Figures 4 and 6 explains how improvements (i) and (ii) can be implemented together, and also explains how improvement (i) could be implemented without improvement (ii). A description of how improvement (ii) can be implemented without improvement (i) is provided below with reference to Figure 8.

Figure 8 shows geometry processing logic 800 of a graphics processing unit. The geometry processing logic 800 could be implemented as the geometry processing logic 104 of the GPU 102 shown in Figure 1. The geometry processing logic 800 comprises splitting logic 802 and a plurality of geometry pipelines 804. In the example shown in Figure 8 the geometry processing logic 800 comprises two geometry pipelines (804₁ and 804₂), but in other examples there may be more geometry pipelines in the geometry processing logic. Each of the geometry pipelines 804 comprises one or more geometry processing modules 806 which are configured to perform respective geometry processing functions. The geometry processing logic 800 also comprises a geometry-tiling arbiter 808 and a tiling module 810. The tiling module 810 comprises region generation logic 812, a tile arbiter 832 and a plurality of tile pipelines 814. In the example shown in Figure 8 the tiling module 810 comprises two tile pipelines (814₁ and 814₂), but in other examples there may be more tile pipelines in the tiling module. Each of the tile pipelines 814 comprises tiling refinement logic 816, an accumulator module 818 and a control stream generator module 820. The tiling module 810 also comprises a tail pointer cache 822 and page allocation control logic 824. The geometry processing logic 800 also comprises a memory management module 826. The 'modules', 'units' and 'logic', and the arbiters, described herein may be implemented in software, hardware or any combination thereof.

When comparing the geometry processing logic 800 to the geometry processing logic 200 shown in Figure 2, the geometry processing logic 800 includes a tile arbiter 832 which is configured to allocate work to the tile pipelines in accordance with a dynamic allocation scheme rather than having a fixed mapping between tiles and tile pipelines, and the tile pipelines 814 use a shared tail pointer cache 822 rather than having a separate tail pointer cache in each of the tile pipelines 814.

A draw call is received at the splitting logic 802. As described above, a draw call includes the information that the GPU needs in order to render an image. For example, a draw call includes a sequence of primitives representing objects in a scene to be rendered. The splitting logic 802 splits the sequence of primitives into batches of primitives, and sends each batch of primitives to one of the geometry pipelines 804. The splitting logic 802 associates each of the batches of primitives with an indication of its position according to the order of the primitives within the sequence of primitives. As described above, the indication of the position of a batch of primitives may be referred to as a Pipeline Interleave Marker (PIM). The batches of primitives are processed by the geometry pipelines 804. In particular, the geometry processing module(s) 806₁ of the geometry pipeline 804₁ performs geometry processing functions on the primitives of a batch of primitives received at the geometry pipeline 804₁, and the geometry processing module(s) 806₂ of the geometry pipeline 804₂ performs geometry processing functions on the primitives of a batch of primitives received at the geometry pipeline 804₂. The geometry processing performed by a geometry pipeline 804 results in: (i) primitives being transformed into the rendering space and stored in primitive blocks, which can be written out to the memory (e.g. memory 108), and (ii) position data for the primitives in the rendering space which can be used by the tiling module 810 to determine which primitives are present within which tiles of the rendering space.

The geometry pipelines operate in parallel on different batches of primitives, and output data to the geometry-tiling arbiter 808, which is to be passed to the tiling module 810. The geometry-tiling arbiter 808 receives primitive data for primitives that have been processed by the geometry pipelines 804, and sends the primitive data to the tiling module 810 in accordance with the order of the primitives within the sequence of primitives. In order to do this, the indications of the positions of the batches of primitives according to the order of the primitives within the sequence of primitives (the PIMs) are used to ensure the correct order is maintained when the outputs from the geometry pipelines 804 are joined. For each primitive block, the primitive data passed from the geometry-tiling arbiter 808 to the tiling module 810 includes a bounding box for the primitive block, indications of the positions of the vertices of the primitives in the primitive block, and some sideband information relating to the primitive block, such as a primitive type of the primitives in the primitive block and the number of primitives in the primitive block.

The tiling module 810 receives the data relating to a primitive block (e.g. an indication of the bounding box of the primitive block, and the positions of the vertices of the primitives in the primitive block) and buffers this data in the tiling module 810 (e.g. within the region generation logic 812). The region generation logic 812 processes each tile within the bounding box of the primitive block. For each tile within the bounding box of the primitive block, the region generation logic 812 performs a test for each of the primitives of the primitive block to determine whether the primitive bounding box for the primitive is present in the tile. That is, the region generation logic 812 determines one or more tile-primitive indications for each tile within the bounding box of the primitive block, wherein the one or more tile-primitive indications for a tile indicate primitives that have primitive bounding boxes that are present within that tile. As mentioned above, the primitive bounding box for a primitive indicates a region of the rendering space which wholly encompasses that primitive. The region generation logic 812 passes the determined one or more tile-primitive indications to the tile arbiter 832. If it is determined that the primitive bounding box of a primitive is present in a tile then the region generation logic 812 generates and outputs a tile-primitive association indication which indicates an association between the tile and the primitive, i.e. indicating that the primitive bounding box for the primitive is present in the tile. In this way, the region generation logic 812 outputs, for each tile within the bounding box of the primitive block, one tile-primitive association indication for each primitive whose primitive bounding box is present within that tile.

The tile arbiter 832 can perform steps S602, S604 and S606 as described above with reference to Figure 6 in order to send the tile-primitive indications to the tile pipelines 814. In particular, in step S602 the tile arbiter 832 receives the tile-primitive indications. In the example shown in Figure 8, the tile arbiter 832 receives the tile-primitive indications from the region generation logic 812. As described above, each of the tile-primitive indications indicates an association between a tile and a set of one or more primitives.

In step S604, the tile arbiter 832 determines which of the tile pipelines 814 to send each of the tile-primitive indications to in accordance with a dynamic allocation scheme which does not have a fixed mapping between tiles and tile pipelines. As described above, to give two examples, the dynamic allocation scheme could be a round robin scheme or a load balancing scheme.

In step S606 the tile arbiter 832 sends each of the tile-primitive indications to the tile pipeline 834 determined for that tile-primitive indication in step S604.

Steps S608 and S610 are performed at each of the tile pipelines 814. The tile pipelines 814 operate in parallel with each other. In step S608, each of the tile pipelines 814 receives the tile-primitive indications (e.g. the tile-primitive association indications determined by the region generation logic 812) that are sent to it by the tile arbiter 832. In step S610, each of the tile pipelines 814 uses the tile-primitive indications to, for each tile for which a tile-primitive indication is received, include in a control stream for that tile, indications of primitives that are present within that tile. In particular, in each of the tile pipelines 814, the tiling refinement logic 816 receives the tile-primitive association indications, and determines for each of the received tile-primitive association indications whether the primitive to which the tile-primitive association indication relates is present within the tile to which the tile-primitive association indication relates. If the tiling refinement logic 816 determines that the primitive to which a tile-primitive association indication relates is present within the tile to which the tile-primitive association indication relates then that tile-primitive association indication is passed to the accumulator module 818. However, if the tiling refinement logic 816 determines that the primitive to which a tile-primitive association indication relates is not present within the tile to which the tile-primitive association indication relates then that tile-primitive association indication is removed from further processing, i.e. it is not passed to the accumulator module 818.

In each tile pipeline 814, the accumulator module 818 receives the tile-primitive indications relating to a tile and relating to primitives of a primitive block. The accumulator module 818 determines a tile-primitive mask for the primitive block indicating which of the primitives of the primitive block are present within the tile. In this way, the accumulator module 818 accumulates, over a number of clock cycles, the results from the tiling refinement logic 816 to form a primitive mask for the tile (which may be referred to as a "tile-primitive mask") in respect of the current primitive block. The tile-primitive masks determined by the accumulator module 818 of a tile pipeline 814 are passed to the control stream generator module 820 of that tile pipeline 814. The tile-primitive mask for a tile indicates a minimal set of primitives in the primitive block which are in that tile.

For each of the tiles for which a tile-primitive indication (e.g. a tile-primitive mask) is received at the control stream generator module 820 of a tile pipeline 814, the control stream generator module 820 of the tile pipeline 814 formats the data appropriately and includes, in a control stream for that tile, indications of primitives that are present within that tile. For example, a primitive mask relating to a primitive block in respect of a tile may be compressed and written to a control stream for the tile.

As described above, the tiling module 810 comprises a tail pointer cache 822 which is configured to store, for each of the tiles of the rendering space, an indication of the location in the control stream for the tile of the data that is most-recently written to the control stream. All of the tile pipelines 814 are configured to read and write data for the control streams of all of the tiles of the rendering space from and to the tail pointer cache 822. That is, the control stream generator module 820 of each of the tile pipelines 814 uses the shared tail pointer cache 822 to determine where new data (i.e. indications of primitives, e.g. in the form of primitive masks) are to be written into the control stream of a tile. The tail pointer cache 822 comprises tile-locking logic configured to ensure that no more than one of the tile pipelines processes data relating to the same tile at any given time.

The control stream generator modules 820 of the tile pipelines 814 request chunks of control stream memory from the page allocation control logic 824. The page allocation control logic 824 interfaces with the memory management module 826 and allocates portions of pages (or "chunks of control stream memory") to the different control streams. The control streams are passed from the control stream generator modules 820 of the tile pipelines 814 to the memory for storage therein in accordance with the allocation of the chunks of control stream memory from the page allocation control logic 824. The memory management module 826 is external to the tiling module 810 and is responsible for managing the allocation of pages of memory (e.g. in memory 108) for the storage of the control streams (from the tiling module 810) and for the primitive blocks (from the geometry pipelines 804).

As described above, in the fragment processing phase of a rendering process, the fragment processing logic 106 reads the control stream for a tile from the memory 108 to determine which primitives are present within the tile. The fragment processing logic 106 reads the primitive data from the memory 108 for those primitives which are present within the tile, as indicated by the control stream for the tile. The fragment processing logic 106 then performs fragment processing, which may for example involve: (i) performing rasterisation on the primitives to determine primitive fragments representing the primitives at discrete sample positions within the tile, (ii) performing hidden surface removal on the primitive fragments to remove fragments which are occluded, e.g. by other fragments in the scene, and (iii) performing fragment shading and/or texturing on the remaining fragments to determine an appearance at each sample position of the tile. Each pixel of an image being rendered may correspond to one or more of the sample positions. The rendered pixel values for a tile can be stored, e.g. in a frame buffer. When all of the tiles have been processed in the fragment processing phase, the rendered pixel values for all of the tiles of the rendering space can be output and used to represent an image. The image may be used in any suitable manner, e.g. the image may be stored, displayed on a display and/or transmitted to another device, e.g. over a network such as the internet.

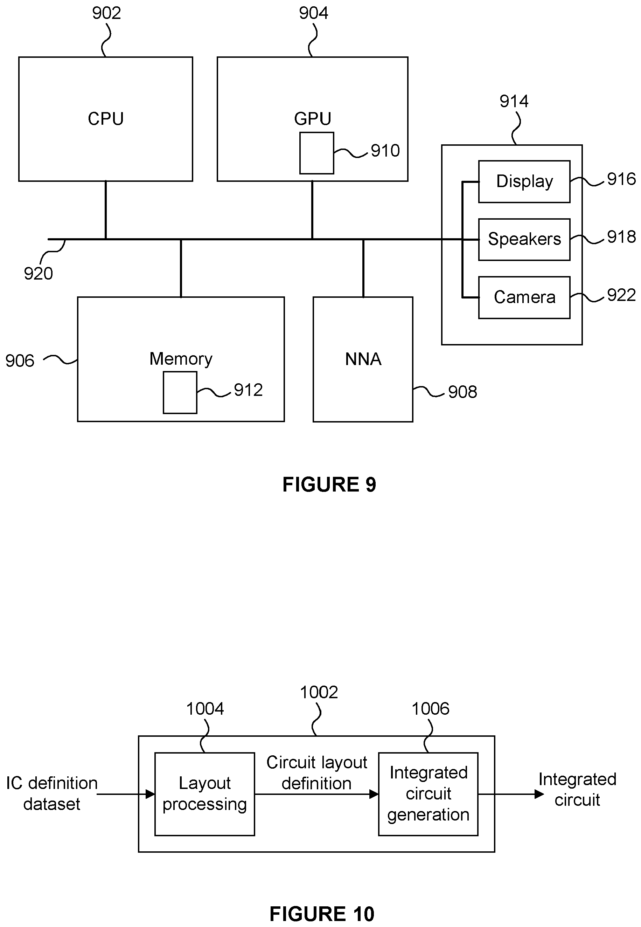

Figure 9 shows a computer system in which the graphics processing systems described herein may be implemented. The computer system comprises a CPU 902, a GPU 904, a memory 906, a neural network accelerator (NNA) 908 and other devices 914, such as a display 916, speakers 918 and a camera 922. The GPU 904 may correspond to the GPU 102, and the memory 906 may correspond to the memory 108. A processing block 910 (which may comprise the geometry processing logic 200, 300 or 800) is implemented on the GPU 904. In other examples, one or more of the depicted components may be omitted from the system, and/or the processing block 910 may be implemented on the CPU 902 or within the NNA 908. The components of the computer system can communicate with each other via a communications bus 920. A store 912 (corresponding to the buffer described above) is implemented as part of the memory 906.

The graphics processing units of Figures 2, 3 and 8 are shown as comprising a number of functional blocks. This is schematic only and is not intended to define a strict division between different logic elements of such entities. Each functional block may be provided in any suitable manner. It is to be understood that intermediate values described herein as being formed by a graphics processing unit need not be physically generated by the graphics processing unit at any point and may merely represent logical values which conveniently describe the processing performed by the graphics processing unit between its input and output.

The graphics processing units described herein may be embodied in hardware on an integrated circuit. The graphics processing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing unit configured to perform any of the methods described herein, or to manufacture a graphics processing unit comprising any apparatus described herein. An integrated circuit definition dataset may be, for example, an integrated circuit description.

Therefore, there may be provided a method of manufacturing, at an integrated circuit manufacturing system, a graphics processing unit as described herein. Furthermore, there may be provided an integrated circuit definition dataset that, when processed in an integrated circuit manufacturing system, causes the method of manufacturing a graphics processing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing unit will now be described with respect to Figure 10.

Figure 10 shows an example of an integrated circuit (IC) manufacturing system 1002 which is configured to manufacture a graphics processing unit as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a graphics processing unit as described in any of the examples herein), process the IC definition dataset, and generate an IC according to the IC definition dataset (e.g. which embodies a graphics processing unit as described in any of the examples herein). The processing of the IC definition dataset configures the IC manufacturing system 1002 to manufacture an integrated circuit embodying a graphics processing unit as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A graphics processing unit configured to process primitives using a rendering space which is sub-divided into a plurality of tiles, the graphics processing unit comprising a tiling module, wherein the tiling module comprises:
a plurality of tile pipelines; and
a tile arbiter configured to:
receive tile-primitive indications, wherein each of the tile-primitive indications indicates an association between a tile and a set of one or more primitives;
determine which of the tile pipelines to send each of the tile-primitive indications to in accordance with a dynamic allocation scheme which does not have a fixed mapping between tiles and tile pipelines; and
send each of the tile-primitive indications to the tile pipeline determined for that tile-primitive indication;
wherein each of the tile pipelines is configured to:
receive the tile-primitive indications that are sent to that tile pipeline by the tile arbiter; and
use the received tile-primitive indications to, for each of the tiles for which a tile-primitive indication is received at the tile pipeline, include in a control stream for that tile, indications of primitives that are present within that tile.

2. The graphics processing unit of claim 1 wherein the tiling module comprises a tail pointer cache configured to store, for each of the tiles of the rendering space, an indication of the location in the control stream for the tile of the data that is most-recently written to the control stream,
wherein all of the tile pipelines are configured to read and write data for the control streams of all of the tiles of the rendering space from and to the tail pointer cache.

3. The graphics processing unit of claim 2 wherein the tail pointer cache comprises tile-locking logic configured to ensure that no more than one of the tile pipelines processes data relating to the same tile at any given time.

4. The graphics processing unit of any preceding claim wherein the dynamic allocation scheme is a round robin scheme or a load balancing scheme.

5. The graphics processing unit of any preceding claim wherein the graphics processing unit comprises geometry processing logic, wherein the tiling module is part of the geometry processing logic, and wherein the geometry processing logic further comprises a plurality of geometry pipelines configured to receive batches of primitives, wherein each of the geometry pipelines comprises:
one or more geometry processing modules configured to perform one or more geometry processing functions on the primitives of a batch of primitives received at the geometry pipeline,
wherein the tiling module is a tiling back-end module,
wherein each of the geometry pipelines comprises a tiling front-end module configured to determine one or more of the tile-primitive indications for each tile of a set of one or more tiles, wherein the one or more tile-primitive indications for a tile indicate which of the primitives of the batch of primitives received at the geometry pipeline are present within that tile;
wherein the tiling back-end module is configured to:
receive the tile-primitive indications determined by the plurality of geometry pipelines; and
for each of the tiles for which a tile-primitive indication is received, include indications of the primitives that are present within that tile in a control stream for that tile.

6. The graphics processing unit of claim 5 wherein the graphics processing unit is configured to receive the primitives as a sequence of primitives, and wherein the tiling back-end module is configured to include the indications of the primitives in the control streams for the tiles in an order in accordance with an order of the primitives within the sequence of primitives.

7. The graphics processing unit of claim 5 or 6 wherein each of the tile pipelines comprises a control stream generator module configured to, for each of the tiles for which it receives a tile-primitive indication, include indications of the primitives that are present within that tile in the control stream for that tile.

8. The graphics processing unit of any of claims 5 to 7 wherein for each of the geometry pipelines:
said one or more geometry processing modules of the geometry pipeline comprises a block generator module configured to generate primitive blocks, wherein each of the primitive blocks includes primitive data representing a set of one or more primitives, and
the one or more tile-primitive indications for a tile determined by the tiling front-end module of the geometry pipeline comprise a tile-primitive mask for each of the primitive blocks indicating which of the primitives of the primitive block are present within that tile.

9. The graphics processing unit of claim 8 wherein the tiling front-end module of each of the geometry pipelines comprises region generation logic configured to determine, for each tile of the rendering space in a bounding box for a primitive block, a tile-primitive association indication for each of the primitives of the primitive block that has a primitive bounding box that is present within that tile, wherein the primitive bounding box for a primitive indicates a region of the rendering space which wholly encompasses that primitive,
optionally wherein the tiling front-end module of each of the geometry pipelines further comprises tiling refinement logic configured to:
receive the determined tile-primitive association indications determined by the region generation logic of that geometry pipeline;
determine, for each of the received tile-primitive association indications whether the primitive to which the tile-primitive association indication relates is present within the tile to which the tile-primitive association indication relates; and
remove a tile-primitive association indication in response to determining that the primitive to which the tile-primitive association indication relates is not present within the tile to which the tile-primitive association indication relates.

10. The graphics processing unit of claim 9 wherein the tiling front-end module of each of the geometry pipelines further comprises an accumulator module configured to:
receive tile-primitive association indications relating to a tile and relating to primitives of a primitive block; and
determine the tile-primitive mask for the primitive block indicating which of the primitives of the primitive block are present within the tile.

11. The graphics processing unit of any preceding claim wherein the graphics processing unit comprises geometry processing logic, wherein the tiling module is part of the geometry processing logic, and wherein the geometry processing logic further comprises a plurality of geometry pipelines configured to receive batches of primitives, wherein each of the geometry pipelines comprises:
one or more geometry processing modules configured to perform one or more geometry processing functions on the primitives of a batch of primitives received at the geometry pipeline,
wherein the graphics processing unit is configured to receive the primitives as a sequence of primitives,
wherein the graphics processing unit further comprises a geometry-tiling arbiter configured to:
receive primitive data for primitives that have been processed by the geometry pipelines; and
send the primitive data to the tiling module in accordance with an order of the primitives within the sequence of primitives,
wherein the tiling module comprises region generation logic configured to:
determine one or more of the tile-primitive indications for each tile of a set of one or more tiles, wherein the one or more tile-primitive indications for a tile indicate primitives that have primitive bounding boxes that are present within that tile, wherein the primitive bounding box for a primitive indicates a region of the rendering space which wholly encompasses that primitive; and
pass the determined one or more tile-primitive indications to the tile arbiter.

12. The graphics processing unit of claim 11 wherein one or both of:
- each of the tile pipelines comprises tiling refinement logic configured to:
receive the determined tile-primitive indications determined by the region generation logic;
determine, for each of the received tile-primitive indications whether the primitive to which the tile-primitive indication relates is present within the tile to which the tile-primitive indication relates; and
remove a tile-primitive indication in response to determining that the primitive to which the tile-primitive indication relates is not present within the tile to which the tile-primitive indication relates; and
- each of the tile pipelines further comprises an accumulator module configured to:
receive tile-primitive indications relating to a tile and relating to primitives of a primitive block, wherein the primitive block includes primitive data representing a set of one or more primitives; and
determine a tile-primitive mask for the primitive block indicating which of the primitives of the primitive block are present within the tile.

13. A method of processing primitives in a graphics processing unit configured to use a rendering space which is sub-divided into a plurality of tiles, the method comprising performing tiling, wherein the tiling comprises:
receiving tile-primitive indications at a tile arbiter, wherein each of the tile-primitive indications indicates an association between a tile and a set of one or more primitives;
determining, at the tile arbiter, which of a plurality of tile pipelines to send each of the tile-primitive indications to in accordance with a dynamic allocation scheme which does not have a fixed mapping between tiles and tile pipelines;
sending each of the tile-primitive indications to the tile pipeline determined for that tile-primitive indication;
at each of the tile pipelines:
receiving the tile-primitive indications that are sent to that tile pipeline; and
using the tile-primitive indications received at the tile pipeline to, for each of the tiles for which a tile-primitive indication is received at the tile pipeline, include in a control stream for that tile, indications of primitives that are present within that tile.

14. Computer readable code configured to cause the method of claim 13 to be performed when the code is run.

15. A computer readable storage medium having stored thereon an integrated circuit definition dataset that, when processed in an integrated circuit manufacturing system, configures the integrated circuit manufacturing system to manufacture a graphics processing unit as claimed in any of claims 1 to 12.

## Amended claims

### Amended claims in accordance with Rule 137(2) EPC.

1. A graphics processing unit (102) configured to process primitives using a rendering space which is sub-divided into a plurality of tiles, the graphics processing unit comprising a tiling module (810), wherein the tiling module comprises:
a plurality of tile pipelines (814); and
a tile arbiter (332, 832) configured to:
receive (S602) tile-primitive indications, wherein each of the tile-primitive indications indicates an association between a tile and a set of one or more primitives;
determine (S604) which of the tile pipelines to send each of the tile-primitive indications to in accordance with a dynamic allocation scheme which does not have a fixed mapping between tiles and tile pipelines; and
send (S606) each of the tile-primitive indications to the tile pipeline determined for that tile-primitive indication;
wherein each of the tile pipelines is configured to:
receive (S608) the tile-primitive indications that are sent to that tile pipeline by the tile arbiter; and
use (S610) the received tile-primitive indications to, for each of the tiles for which a tile-primitive indication is received at the tile pipeline, include in a control stream for that tile, indications of primitives that are present within that tile.

2. The graphics processing unit of claim 1 wherein the tiling module comprises a tail pointer cache (338, 822) configured to store, for each of the tiles of the rendering space, an indication of the location in the control stream for the tile of the data that is most-recently written to the control stream,
wherein all of the tile pipelines are configured to read and write data for the control streams of all of the tiles of the rendering space from and to the tail pointer cache.

3. The graphics processing unit of claim 2 wherein the tail pointer cache comprises tile-locking logic configured to ensure that no more than one of the tile pipelines processes data relating to the same tile at any given time.

4. The graphics processing unit of any preceding claim wherein the dynamic allocation scheme is a round robin scheme or a load balancing scheme.

5. The graphics processing unit of any preceding claim wherein the graphics processing unit comprises geometry processing logic (104, 300), wherein the tiling module is part of the geometry processing logic, and wherein the geometry processing logic further comprises a plurality of geometry pipelines (304) configured to receive (S408) batches of primitives (504, 506, 508, 510), wherein each of the geometry pipelines comprises:
one or more geometry processing modules (306) configured to perform (S410) one or more geometry processing functions on the primitives of a batch of primitives received at the geometry pipeline,
wherein the tiling module is a tiling back-end module (310),
wherein each of the geometry pipelines comprises a tiling front-end module (308) configured to determine (S412) one or more of the tile-primitive indications for each tile of a set of one or more tiles, wherein the one or more tile-primitive indications for a tile indicate which of the primitives of the batch of primitives received at the geometry pipeline are present within that tile;
wherein the tiling back-end module is configured to:
receive (S414) the tile-primitive indications determined by the plurality of geometry pipelines; and
for each of the tiles for which a tile-primitive indication is received, include (S416) indications of the primitives that are present within that tile in a control stream for that tile.

6. The graphics processing unit of claim 5 wherein the graphics processing unit is configured to receive the primitives as a sequence of primitives, and wherein the tiling back-end module is configured to include the indications of the primitives in the control streams for the tiles in an order in accordance with an order of the primitives within the sequence of primitives.

7. The graphics processing unit of claim 5 or 6 wherein each of the tile pipelines comprises a control stream generator module (336) configured to, for each of the tiles for which it receives a tile-primitive indication, include (S608) indications of the primitives that are present within that tile in the control stream for that tile.

8. The graphics processing unit of any of claims 5 to 7 wherein for each of the geometry pipelines:
said one or more geometry processing modules of the geometry pipeline comprises a block generator module (322) configured to generate primitive blocks, wherein each of the primitive blocks includes primitive data representing a set of one or more primitives, and
the one or more tile-primitive indications for a tile determined by the tiling front-end module of the geometry pipeline comprise a tile-primitive mask for each of the primitive blocks indicating which of the primitives of the primitive block are present within that tile.

9. The graphics processing unit of claim 8 wherein the tiling front-end module of each of the geometry pipelines comprises region generation logic (324) configured to determine, for each tile of the rendering space in a bounding box (502, 704) for a primitive block, a tile-primitive association indication for each of the primitives of the primitive block that has a primitive bounding box (514, 516, 518, 520) that is present within that tile, wherein the primitive bounding box for a primitive indicates a region of the rendering space which wholly encompasses that primitive,
optionally wherein the tiling front-end module of each of the geometry pipelines further comprises tiling refinement logic (326) configured to:
receive the determined tile-primitive association indications determined by the region generation logic of that geometry pipeline;
determine, for each of the received tile-primitive association indications whether the primitive to which the tile-primitive association indication relates is present within the tile to which the tile-primitive association indication relates; and
remove a tile-primitive association indication in response to determining that the primitive to which the tile-primitive association indication relates is not present within the tile to which the tile-primitive association indication relates.

10. The graphics processing unit of claim 9 wherein the tiling front-end module of each of the geometry pipelines further comprises an accumulator module (328) configured to:
receive tile-primitive association indications relating to a tile and relating to primitives of a primitive block; and
determine the tile-primitive mask for the primitive block indicating which of the primitives of the primitive block are present within the tile.

11. The graphics processing unit of any preceding claim wherein the graphics processing unit comprises geometry processing logic, wherein the tiling module is part of the geometry processing logic, and wherein the geometry processing logic further comprises a plurality of geometry pipelines configured to receive batches of primitives, wherein each of the geometry pipelines comprises:
one or more geometry processing modules configured to perform one or more geometry processing functions on the primitives of a batch of primitives received at the geometry pipeline,
wherein the graphics processing unit is configured to receive the primitives as a sequence of primitives,
wherein the graphics processing unit further comprises a geometry-tiling arbiter (808) configured to:
receive primitive data for primitives that have been processed by the geometry pipelines; and
send the primitive data to the tiling module in accordance with an order of the primitives within the sequence of primitives,
wherein the tiling module comprises region generation logic configured to:
determine one or more of the tile-primitive indications for each tile of a set of one or more tiles, wherein the one or more tile-primitive indications for a tile indicate primitives that have primitive bounding boxes that are present within that tile, wherein the primitive bounding box for a primitive indicates a region of the rendering space which wholly encompasses that primitive; and
pass the determined one or more tile-primitive indications to the tile arbiter.

12. The graphics processing unit of claim 11 wherein one or both of:
- each of the tile pipelines comprises tiling refinement logic configured to:
receive the determined tile-primitive indications determined by the region generation logic;
determine, for each of the received tile-primitive indications whether the primitive to which the tile-primitive indication relates is present within the tile to which the tile-primitive indication relates; and
remove a tile-primitive indication in response to determining that the primitive to which the tile-primitive indication relates is not present within the tile to which the tile-primitive indication relates; and
- each of the tile pipelines further comprises an accumulator module (328, 818) configured to:
receive tile-primitive indications relating to a tile and relating to primitives of a primitive block, wherein the primitive block includes primitive data representing a set of one or more primitives; and
determine a tile-primitive mask for the primitive block indicating which of the primitives of the primitive block are present within the tile.

13. A method of processing primitives in a graphics processing unit configured to use a rendering space which is sub-divided into a plurality of tiles, the method comprising performing tiling, wherein the tiling comprises:
receiving (S602) tile-primitive indications at a tile arbiter, wherein each of the tile-primitive indications indicates an association between a tile and a set of one or more primitives;
determining (S604), at the tile arbiter, which of a plurality of tile pipelines to send each of the tile-primitive indications to in accordance with a dynamic allocation scheme which does not have a fixed mapping between tiles and tile pipelines;
sending (S606) each of the tile-primitive indications to the tile pipeline determined for that tile-primitive indication;
at each of the tile pipelines:
receiving (S608) the tile-primitive indications that are sent to that tile pipeline; and
using (S610) the tile-primitive indications received at the tile pipeline to, for each of the tiles for which a tile-primitive indication is received at the tile pipeline, include in a control stream for that tile, indications of primitives that are present within that tile.

14. Computer readable code configured to cause the method of claim 13 to be performed when the code is run.

15. A computer readable storage medium having stored thereon an integrated circuit definition dataset that, when processed in an integrated circuit manufacturing system (1002), configures the integrated circuit manufacturing system to manufacture a graphics processing unit as claimed in any of claims 1 to 12.
